# EUROPÄISCHE PATENTSCHRIFT

(11) **EP 2 857 733 B1**
(45) Veröffentlichungstag und Bekanntmachung des Hinweises auf die Patenterteilung: **14.09.2016**
(21) Anmeldenummer: 13187120.4
(22) Anmeldetag: 02.10.2013
(51) Int. Cl.: F16L 19/065, F16L 19/00, F16L 25/01, F16L 33/22, F16L 39/02, B67D 7/32, F16B 39/32, B67D 7/04

(54) **Kombination umfassend ein Schlauchanschlussteil, einen Schlauchstutzen und eine Mutter**
Combination comprising a hose connector, a hose nipple and a nut
Combinaison comportant une pièce de raccordement, un embout de tuyau souple et un écrou

(43) Veröffentlichungstag der Anmeldung: 08.04.2015
(73) Patentinhaber: Elaflex Hiby Tanktechnik GmbH & Co. KG, 22525 Hamburg (DE)
(72) Erfinder: Meyer, Heinz-Ulrich, 22589 Hamburg (DE)
(74) Vertreter: Glawe, Delfs, Moll

(56) Entgegenhaltungen:
- EP-A1- 2 620 684
- WO-A1-89/10323
- GB-A- 2 029 538
- US-A- 5 285 744
- US-A- 5 746 454
- US-A- 5 799 834
- US-A1- 2011 067 779
- US-A1- 2012 001 425
- US-B1- 6 412 832

## Beschreibung

Die Erfindung betrifft eine Kombination gemäß dem Oberbegriff des Anspruchs 1, umfassend einen Schlauchstutzen für einen Fluidschlauch, eine Mutter zur Anordnung auf dem Schlauchstutzen sowie ein Schlauchanschlussteil für einen Fluidschlauch.

Die Erfindung liegt auf dem Gebiet der Schlauchanschlüsse. Ein typisches Schlauchanschlussteil weist ein Innengewinde auf, das mit einem korrespondierenden Außengewinde eines Schlauchstutzens flüssigkeitsdicht verbunden werden kann. Aus allgemeiner Vorbenutzung sind beispielsweise Zapfsäulenanschlüsse bekannt, die ein feststehendes Innengewinde bzw. eine drehbare Metallmutter mit Innengewinde aufweisen. Diese können mit einem Schlauchstutzen mit Außengewinde flüssigkeitsdicht verbunden werden. Nachteilig an einem feststehenden Innengewinde ist, dass der Zapfschlauch, der in der Regel eine gewollte Krümmung aufweist, bei der Montage nicht ausgerichtet werden kann. Das Spiel einer drehbaren Mutter mit Innengwinde erlaubt hingegen zwar eine Ausrichtung des Zapfschlauchs, nicht jedoch dessen Fixierung in der gewünschten Ausrichtung.

Die US 5,285,744 offenbart eine Schlauchanordnung für die Kraftstoffleitung zu einer Zapfpistole, welche eine vollständige Rotation der Zapfpistole relativ zum angeschlossenen Schlauch erlaubt. Aus der US 6,412832 B1 ist ein Fitting mit einer Mutter und einem Anschlussteil bekannt, zwischen denen ein speziell ausgebildetes Rohrende mit einer Nut eingeklemmt werden kann. Die US 5 799 834 A offenbart ein Teleskopsteigrohr zur Verbindung einer elektrischen Tauchpumpe in einem Treibstoffspeichertank mit einem Verteilerkopf. Die EP 2 620 684 A1 betrifft eine Vorrichtung um Rohre und Zubehörteile zu verbinden, mit einem Haltekörper mit elastischen Radialelementen und einer mit dem Haltekörper zusammenwirkenden Mutter. GB 2 029 538 A offenbart einen Rohranschluss mit einer angeformten Lippe, welche gleichzeitig die Funktion einer Dichtungsverbindung und eines mechanischen Verankerungsrings bildet. US 2012/001425 A1 betrifft Hydraulikverbindungen mit einem männlichen Verbindungsteil und einem weiblichen Verbindungsteil, welche aufeinander abgestimmte Dichtflächen aufweisen. WO 89/10323 A1 offenbart eine Schlauchanordnung für eine Kraftstoffleitung, mit Flüssigkeits- und Dampfrückgewinnung. Dokument US 5,746,454 A offenbart ein unterirdisches Rohrleitungssystem, das koaxiale Rohre mit einem primären Zuleitungsrohr und einem sekundären Einschlussrohr so miteinander verbindet, dass der Zwischenraum zwischen den beiden Rohren mit dem Zwischenraum in anderen Rohrsegmenten verbunden werden kann. Die US 2011/0067779 A1 betrifft Dampfrückgewinnungsventile.

Vor diesem Hintergrund ist es die Aufgabe der Erfindung, Mittel zum Anschließen eines Schlauchs bereitzustellen, die ein einfaches Ausrichten und Fixieren des Schlauchs bei der Montage ermöglichen.

Gelöst wird diese Aufgabe durch eine Kombination der eingangs genannten Art mit den Merkmalen des Anspruchs 1, mit einer Mutter, einem Schlauchstutzen und einem Schlauchanschlussteil, die jeweils so aufeinander abgestimmt sind, dass sie zur Lösung des Problems zusammenwirken.

Zunächst sei die erfindungsgemäße Mutter erläutert.

Eine erfindungsgemäße Mutter zur Anordnung auf einem Schlauchstutzen weist eine Verbindungsvorrichtung auf, welche mit einem Schlauchanschlussteil flüssigkeitsdicht verbindbar ist. Hierbei kann es sich um jede geeignete, im Stand der Technik bekannte Verbindungsvorrichtung handeln. Im Rahmen der Erfindung ist es bevorzugt, wenn die Verbindungsvorrichtung ein Außengewinde umfasst, welches mit einem korrespondierenden Innengewinde des Schlauchanschlussteils flüssigkeitsdicht verbindbar ist.

Eine erfindungsgemäße Mutter weist zudem eine Aufnahme für den Schlauchstutzen auf, mit einem ersten Ende und einem zweiten Ende, wobei die Aufnahme dazu ausgebildet ist, den Schlauchstutzen in Umfangsrichtung formschlüssig zu umfassen, derart, dass die Mutter und der Schlauchstutzen in Umfangsrichtung gegeneinander drehbar sind. Die Begriffe Umfangsrichtung, Axialrichtung und Radialrichtung beziehen sich im Rahmen der Erfindung auf die Geometrie der Mutter, wobei die Axialrichtung die Richtung parallel zur Innenumfangsfläche der Aufnahme für den Schlauchstutzen und quer zur Umfangsrichtung bezeichnet.

Die erfindungsgemäße Lösung sieht vor, dass die Mutter einen Verdrehschutz aufweist, der so ausgebildet ist, dass der durch ein Strukturelement des Schlauchanschlussteils von einer Offenstellung, in der die Mutter und der Schlauchstutzen in Umfangsrichtung gegeneinander drehbar sind, wenn die Mutter auf dem Schlauchstutzen angeordnet ist, überführbar ist in eine Geschlossenstellung, in der ein Drehen der Mutter in Umfangsrichtung relativ zum Schlauchstutzen verhindert wird, wenn die Mutter auf dem Schlauchstutzen angeordnet ist.

Im Rahmen der Erfindung sind die Begriffe Offenstellung und Geschlossenstellung nicht auf diskrete Zustände beschränkt. Im Rahmen der Erfindung kann der Übergang von der Offenstellung in die Geschlossenstellung fließend sein. Die Unterscheidung zwischen Offenstellung und Geschlossenstellung kann von einem bestimmten Drehmoment abhängen, das erforderlich ist, um ein Drehen der Mutter in Umfangsrichtung relativ zum Schlauchstutzen zu bewirken. Anders ausgedrückt, umfasst im Rahmen der Erfindung der Begriff Geschlossenstellung auch solche Ausführungsformen der Erfindung, bei denen ein Drehen der Mutter in Umfangsrichtung relativ zum Schlauchstutzen unterhalb eines bestimmten Drehmomentschwellenwerts verhindert wird, der vorzugsweise so gewählt ist, dass im normalen Gebrauch der erfindungsgemäßen Mutter, bzw. des erfindungsgemäßen Schlauchstutzens, ein Drehen der Mutter in Umfangsrichtung relativ zum Schlauchstutzen verhindert wird. Im Rahmen der Erfindung ist der Drehmomentschwellenwert bevorzugt größer 10 Nm, weiter vorzugsweise größer 20 Nm, weiter vorzugsweise größer 30 Nm, besonders bevorzugt größer 40 Nm. Weitere im Rahmen der Erfindung bevorzugte Drehmomentschwellenwerte liegen im Bereich von 10 Nm bis 50 Nm, weiter vorzugsweise im Bereich von 10 Nm bis 40 Nm, weiter vorzugsweise im Bereich von 20 Nm bis 30 Nm, besonders bevorzugt im Bereich von 40 Nm bis 50 Nm.

Die Erfindung hat erkannt, dass ein entsprechend ausgebildeter Verdrehschutz eine einfache Ausrichtung und Fixieren des Schlauchs bei der Montage erlaubt. So kann ein am Schlauchstutzen befestigter Schlauch in der Offenstellung des Verdrehschutzes dadurch ausgerichtet werden, dass der Schlauchstutzen relativ zur Mutter in Umfangsrichtung gedreht wird, bis die gewünschte Ausrichtung erreicht ist. Der Verdrehschutz kann sodann durch Zusammenwirken der Mutter mit dem Schlauchanschlussteil von der Offenstellung in die Geschlossenstellung überführt werden, um den Schlauch in der gewünschten Ausrichtung zu fixieren.

Die Mutter ist wie oben beschrieben auf ein Schlauchanschlussteil abgestimmt. Bei dem Schlauchanschlussteil kann es sich um ein Schlauchanschlussteil für einen Fluidschlauch, vorzugsweise für einen Flüssigkeitsschlauch, besonders bevorzugt für einen Kraftstoffzapfschlauch handeln, umfassend einen Fluidkanal an dessen einem Ende eine Verbindungsvorrichtung angeordnet ist, welche eine flüssigkeitsdichte Verbindung mit der Mutter erlaubt, wobei die Verbindungsvorrichtung jede im Stand der Technik bekannte, geeignete Verbindungsvorrichtung sein kann, wobei die Verbindungsvorrichtung bevorzugt ein Innengewinde umfasst, das mit einem korrespondierenden Außengewinde der Mutter verbunden werden kann, wobei das Schlauchanschlussteil ein Strukturelement umfasst, das dazu ausgebildet ist, den Verdrehschutz der Mutter von einer Offenstellung in eine Geschlossenstellung zu überführen. Die Mutter kann insbesondere auf ein Schlauchanschlussteil der unten beschriebenen Art abgestimmt sein. Auf die unten stehenden Ausführungen zum erfindungsgemäßen Schlauchanschlussteil wird im Kontext der Mutter zur Vermeidung von Wiederholungen ausdrücklich Bezug genommen.

Die Mutter ist wie oben beschrieben auf einen Schlauchstutzen abgestimmt. Bei dem Schlauchstutzen kann es sich um einen Schlauchstutzen für einen Fluidschlauch, vorzugsweise für einen Flüssigkeitsschlauch, besonders bevorzugt für einen Kraftstoffzapfschlauch handeln, mit einem Rohransatz zum Befestigen des Fluidschlauchs, wobei die Außenseite des Schlauchstutzens eine Auflagefläche für die Mutter aufweist, wobei die Abmessungen des Schlauchstutzens so auf die Mutter abgestimmt sind, dass der Schlauchstutzen von der Mutter formschlüssig umfasst werden kann, derart, dass der Schlauchstutzen und die Mutter in Umfangsrichtung gegeneinander drehbar sind. Die Mutter kann insbesondere auf einen Schlauchstutzen der unten beschriebenen Art abgestimmt sein. Auf die unten stehenden Ausführungen zum Schlauchstutzen wird im Kontext der Mutter zur Vermeidung von Wiederholungen ausdrücklich Bezug genommen.

Im Rahmen der Erfindung ist die Mutter bevorzugt so ausgebildet, dass der Verdrehschutz an einem bestimmten Punkt des Verbindungsvorgangs zwischen der Mutter und dem Schlauchanschlussteil durch das Strukturelement des Schlauchanschlussteils von der Offenstellung in die Geschlossenstellung überführt wird, wenn die Mutter mit dem Schlauchanschlussteil verbunden wird. Dies hat den Vorteil, dass die Fixierung des Schlauchs an einem bestimmten Punkt des Verbindungsvorgangs erfolgt. Vorzugsweise liegt dieser Punkt gegen Ende des Verbindungsvorgangs. Besonders vorteilhaft ist es, wenn die Mutter so ausgebildet ist, dass der Verdrehschutz erst dann mit dem Strukturelement des Schlauchanschlussteils zusammenwirkt, um den Verdrehschutz von der Offenstellung in die Geschlossenstellung zu überführen, wenn die Mutter mit dem Schlauchanschlussteil beinahe vollständig verbunden ist. Beinahe vollständig verbunden bedeutet im Rahmen der Erfindung, dass nur noch ein geringer Aufwand nötig ist, um den Verbindungsvorgang zwischen der Mutter und dem Schlauchanschlussteil abzuschließen. Dies hat den Vorteil, dass der Schlauch erst gegen Ende des Verbindungsvorgangs ausgerichtet werden muss und mit geringem Aufwand in der gewünschten Ausrichtung fixiert werden kann. Am Beispiel einer Schraubverbindung erläutert bedeutet dies, dass der Monteur das Schlauchanschlussteil mit der auf dem Schlauchstutzen angeordneten Mutter, beispielsweise mittels Handmontage, weitgehend verschrauben kann, bevor der Schlauch gegen Ende des Verschraubungsvorgangs ausgerichtet wird und sodann, zum Beispiel mittels Schlüsselmontage, durch ein Zusammenwirken der Mutter mit dem Schlauchanschlussteil fixiert wird.

Die Verbindungsvorrichtung der Mutter ist bevorzugt an der Außenseite der Mutter angeordnet. Im Rahmen der Erfindung bezeichnet die Außenseite der Mutter diejenige Seite der Mutter, welche dem Schlauchstutzen abgewandt ist, wenn die Mutter auf dem Schlauchstutzen angeordnet ist. Entsprechend bezeichnet die Innenseite der Mutter im Rahmen der Erfindung diejenige Seite der Mutter, welche dem Schlauchstutzen zugewandt ist, wenn die Mutter auf dem Schlauchstutzen angeordnet ist.

Vorzugsweise ist der Verdrehschutz an der Innenseite der Mutter angeordnet. Dies erleichtert das Zusammenwirken des Verdrehschutzes mit dem Schlauchstutzen. Es ist vorteilhaft, wenn der Verdrehschutz im Bereich der Verbindungsvorrichtung angeordnet ist. Dies erleichtert das Zusammenwirken der Mutter mit dem Schlauchanschlussteil, um den Verdrehschutz von einer Offenstellung in eine Geschlossenstellung zu überführen. Vorzugsweise sind sowohl der Verdrehschutz als auch die Verbindungsvorrichtung der Mutter im Bereich des ersten Endes der Aufnahme angeordnet. Besonders bevorzugt ist der Verdrehschutz an der Innenseite der Mutter im Bereich des ersten Endes der Aufnahme angeordnet, wobei der Verdrehschutz in die Aufnahme hineinragt, und die Verbindungsvorrichtung ist an der Außenseite der Mutter im Bereich des ersten Endes der Aufnahme angeordnet, wobei sich die Verbindungsvorrichtung außerhalb der Aufnahme befindet.

Im Rahmen der Erfindung kann das Zusammenwirken der Mutter mit dem Schlauchanschlussteil die Ausübung einer Kraft auf den Verdrehschutz durch das Strukturelement des Schlauchanschlussteils umfassen, insbesondere die Ausübung einer radialen Kraft.

Eine vorteilhafte Ausführungsform der Erfindung sieht vor, dass der Verdrehschutz mindestens ein, bevorzugt an der Innenseite der Mutter angeordnetes, Klemmelement umfasst, das von einer Offenstellung, die eine Drehbewegung der Mutter in Umfangsrichtung relativ zum Schlauchstutzen erlaubt, wenn die Mutter auf dem Schlauchstutzen angeordnet ist, in eine Klemmstellung überführbar ist, in der das Klemmelement, zur Verhinderung einer Drehbewegung der Mutter in Umfangsrichtung relativ zum Schlauchstutzen, gegen den Schlauchstutzen gedrückt wird, wenn die Mutter auf dem Schlauchstutzen angeordnet ist.

Im Rahmen der Erfindung sind die Begriffe Offenstellung und Klemmstellung nicht auf diskrete Zustände beschränkt. Im Rahmen der Erfindung kann der Übergang von der Offenstellung in die Klemmstellung fließend sein. Die Unterscheidung zwischen Offenstellung und Klemmstellung kann von einem bestimmten Drehmoment abhängen, das erforderlich ist, um ein Drehen der Mutter in Umfangsrichtung relativ zum Schlauchstutzen zu bewirken. Anders ausgedrückt, umfasst im Rahmen der Erfindung der Begriff Klemmstellung auch solche Ausführungsformen der Erfindung, bei denen ein Drehen der Mutter in Umfangsrichtung relativ zum Schlauchstutzen unterhalb eines bestimmten Drehmomentschwellenwerts verhindert wird, der vorzugsweise so gewählt ist, dass im normalen Gebrauch der erfindungsgemäßen Mutter, bzw. des erfindungsgemäßen Schlauchstutzens, ein Drehen der Mutter in Umfangsrichtung relativ zum Schlauchstutzen verhindert wird. Im Rahmen der Erfindung ist der Drehmomentschwellenwert bevorzugt größer 10 Nm, weiter vorzugsweise größer 20 Nm, weiter vorzugsweise größer 30 Nm, besonders bevorzugt größer 40 Nm. Weitere im Rahmen der Erfindung bevorzugte Drehmomentschwellenwerte liegen im Bereich von 10 Nm bis 50 Nm, weiter vorzugsweise im Bereich von 10 Nm bis 40 Nm, weiter vorzugsweise im Bereich von 20 Nm bis 30 Nm, besonders bevorzugt im Bereich von 40 Nm bis 50 Nm.

Bevorzugt ist das mindestens eine Klemmelement so dimensioniert und angeordnet, dass das Strukturelement des Schlauchanschlussteils direkt auf das Klemmelement wirken kann. Dies ermöglicht eine vergleichsweise einfache bauliche Realisierung.

Vorteilhafterweise ist die Mutter so ausgebildet, dass das mindestens eine Klemmelement an einem bestimmten Punkt des Verbindungsvorgangs zwischen der Mutter und dem Schlauchanschlussteil durch ein Zusammenwirken mit dem Strukturelement des Schlauchanschlussteils von der Offenstellung in die Klemmstellung überführt wird, wenn die Mutter mit dem Schlauchanschlussteil verbunden wird. Dies hat den Vorteil, dass die Fixierung des Schlauchs an einem bestimmten Punkt des Verbindungsvorgangs erfolgt. Vorzugsweise liegt dieser Punkt gegen Ende des Verbindungsvorgangs. Das mindestens eine Klemmelement ist vorzugsweise so angeordnet und dimensioniert, dass es erst dann mit dem Strukturelement des Schlauchanschlussteils zusammenwirkt, um das Klemmelement von der Klemmstellung in die Offenstellung zu überführen, wenn die Mutter mit dem Schlauchanschlussteil beinahe vollständig verbunden ist. Letzteres hat den Vorteil, dass der Schlauch erst gegen Ende des Verbindungsvorgangs ausgerichtet werden muss und mit geringem Aufwand in der gewünschten Ausrichtung fixiert werden kann.

Das mindestens eine Klemmelement ist vorzugsweise dazu ausgelegt, mittels einer Klemmkraft, bevorzugt einer radialen Klemmkraft, in der Klemmstellung gehalten zu werden. In einer besonders bevorzugten Ausführungsform der Erfindung, ist das mindestens eine Klemmelement dazu ausgelegt, durch direkte Einwirkung des Strukturelements mittels einer radialen Klemmkraft in der Klemmstellung gehalten zu werden.

Es kann vorgesehen sein, dass der Verdrehschutz mindestens zwei Klemmelemente umfasst. Vorteilhafterweise sind die Klemmelemente in Umfangsrichtung voneinander beabstandet. Die Abstände zwischen den Klemmelementen können jeweils gleich groß sein. Vorzugsweise umfasst der Verdrehschutz 2 bis 12, weiter vorzugsweise 4 bis 8, besonders bevorzugt 6 Klemmelemente, welche jeweils in Umfangsrichtung voneinander beabstandet sein können.

Vorteilhafterweise umfasst die Verbindungsvorrichtung ein Außengewinde, welches mit einem korrespondierenden Innengewinde des Schlauchanschlussteils flüssigkeitsdicht verbindbar ist, wobei das Klemmelement oder die Klemmelemente in Axialrichtung über das Außengewinde hinausragen.

Es kann vorgesehen sein, dass die Verbindungsvorrichtung an der Außenseite der Mutter im Bereich des ersten Endes der Aufnahme angeordnet ist und/oder das Klemmelement oder die Klemmelemente an der Innenseite der Mutter im Bereich des ersten Endes der Aufnahme angeordnet sind.

Vorzugsweise sind das Klemmelement oder die Klemmelemente an der Innenseite der Mutter angeordnet. Dies erleichtert das Zusammenwirken mit dem Schlauchstutzen. Es ist vorteilhaft, wenn das Klemmelement oder die Klemmelemente, im Bereich der Verbindungsvorrichtung angeordnet sind. Dies erleichtert das Zusammenwirken der Klemmelemente mit dem Strukturelement des Schlauchanschlussteils in Abhängigkeit vom Verbindungsvorgang zwischen der Mutter und dem Schlauchanschlussteil. Vorzugsweise sind sowohl das Klemmelement oder die Klemmelemente als auch die Verbindungsvorrichtung der Mutter im Bereich des ersten Endes der Aufnahme angeordnet. Besonders bevorzugt ist das Klemmelement oder die Klemmelemente an der Innenseite der Mutter im Bereich des ersten Endes der Aufnahme angeordnet, wobei das Klemmelement oder die Klemmelemente in die Aufnahme hineinragen, und die Verbindungsvorrichtung ist an der Außenseite der Mutter im Bereich des ersten Endes der Aufnahme angeordnet, wobei sich die Verbindungsvorrichtung außerhalb der Aufnahme befindet.

Die Mutter kann aus Kunststoff, vorzugsweise aus einem elektrisch leitfähigen Kunststoff, besonders bevorzugt aus einem elektrisch leitfähigen Kunststoff mit einem elektrischen Widerstand gemäß EN 13617-2 kleiner 100 000 Ohm, vorzugsweise mit einem elektrischen Widerstand gemäß EN 13617-2 zwischen 200 und 1000 Ohm bestehen. Der Kunststoff ist vorzugsweise ausgewählt aus der Gruppe bestehend aus Polyamiden (PA) und Polyetheretherketonen (PEEK).

Die Mutter ist bevorzugt dazu ausgebildet, dass die Verbindung zwischen der Mutter und dem Schlauchanschlussteil einer Zugkraft von mindestens 2000 N über 2 min, vorzugsweise mindestens 2000 N über 5 min standhält. Die Messung erfolgt gemäß EM 13483 Anhang K, wobei die Kraft aufgebracht wird, indem die Klemmen der Prüfvorrichtung mit einer Geschwindigkeit von (75±5) mm/min auseinandergezogen werden.

Vorteilhafterweise weist die Mutter Verstärkungselemente auf, wobei die Verstärkungselemente vorzugsweise in Umfangsrichtung voneinander beabstandet sind und/oder Vorzugsweise an der Innenseite der Mutter, bevorzugt im Bereich des ersten Endes der Aufnahme, angeordnet sind und/oder vorzugsweise im Beeich der Verbindungsvorrichtung angeordnet sind. Die Anordnung der Verstärkungselemente im Bereich der Verbindungsvorrichtung dient der Erhöhung der Zugfestigkeit der Verbindung zwischen der Mutter und dem Schlauchanschlussteil.

Die Aufnahme für den Schlauchstutzen kann sich vorteilhafterweise über die gesamte axiale Ausdehnung der Mutter erstrecken.

Vorteilhafterweise ist die Mutter dazu ausgelegt mit einem Schlauchanschlussteil für einen Kraftstoff- und/oder Gasschlauch, vorzugsweise mit einem Zapfsäulenanschluss, besonders bevorzugt mit einem Zapfsäulenanschluss für einen Koaxialschlauch verbunden zu werden.

Es ist vorteilhaft, wenn die Verbindungsvorrichtung der Mutter so ausgebildet ist, dass sie auch eine Verbindung mit einem Schlauchanschlussteil erlaubt, das kein erfindungsgemäßes Strukturelement aufweist. Eine solche Verbindung erlaubt zwar nur die Ausrichtung des Schlauchs und nicht seine Fixierung. Sie ermöglicht aber ein schrittweises Nachrüsten von bestehenden Schlauchanschlüssen, indem der Schlauchanschluss zuerst mit einer erfindungsgemäßen Mutter und einem erfindungsgemäßen Schlauchstutzen nachgerüstet wird, bevor eine Nachrüstung mit einem erfindungsgemäßen Schlauchanschlussteil erfolgt.

Die Mutter dient zur Anordnung auf einem Schlauchstutzen und kann zu dieser Anordnung bestimmt sein. Die Erfindung ist nicht auf eine bestimmte Art der Anordnung beschränkt. Beispielsweise kann die Mutter auf einen Schlauchstutzen aufsteckbar sein. In diesem Fall ist es vorteilhaft, wenn die Mutter mindestens ein Rastelement aufweist, das mit mindestens einem Halteelement des Schlauchstutzens zusammenwirken kann, um die Mutter auf dem Schlauchstutzen in Axialrichtung zu fixieren und/oder wenn mindestens ein Klemmelement der Mutter als Rastelement ausgebildet ist, derart, dass es mit mindestens einem Halteelement des Schlauchstutzenszusammenwirken kann, um die Mutter auf dem Schlauchstutzen in Axialrichtung zu fixieren.

Die Mutter kann als Mehrkantmutter, vorzugsweise als Dreikant-, Vierkant-, Sechskant-, Achtkant- oder Zwölfkantmutter, besonders bevorzugt als Sechskantmutter, ausgebildet sein. Vorteilhafterweise ist die Mehrkantstruktur an der Außenseite der Mutter im Bereich des zweiten Endes der Aufnahme angeordnet.

Gegenstand der Erfindung ist ferner ein Schlauchstutzen. Dieser sei nachstehend erläutert.

Schlauchstutzen sind dem Fachmann bekannt. Sie weisen einen Durchgang für das Fluid und in der Regel einen Rohransatz zum Befestigen des Schlauchs auf.

Bei dem erfindungsgemäßen Schlauchstutzen handelt es sich um einen Schlauchstutzen für einen Fluidschlauch, vorzugsweise für einen Flüssigkeitsschlauch, besonders bevorzugt für einen Kraftstoffzapfschlauch, mit einem Rohransatz zum Befestigen des Fluidschlauchs, wobei die Außenseite des Schlauchstutzens eine Auflagefläche für die Mutter aufweist, wobei die Abmessungen des Schlauchstutzens so auf die Mutter abgestimmt sind, dass der Schlauchstutzen von der Mutter formschlüssig umfasst werden kann, derart, dass der Schlauchstutzen und die Mutter in Umfangsrichtung gegeneinander drehbar sind.

Der Schlauchstutzen ist wie oben beschrieben auf eine Mutter abgestimmt. Dabei kann es sich um eine Mutter zur Anordnung auf dem Schlauchstutzen handeln, die eine Verbindungsvorrichtung umfasst, welche mit einem Schlauchanschlussteil flüssigkeitsdicht verbindbar ist, sowie eine Aufnahme für den Schlauchstutzen, mit einem ersten Ende und einem zweiten Ende, wobei die Aufnahme dazu ausgebildet ist, den Schlauchstutzen in Umfangsrichtung formschlüssig zu umfassen, derart, dass die Mutter und der Schlauchstutzen in Umfangsrichtung gegeneinander drehbar sind, wobei die Mutter einen Verdrehschutz aufweist, der so ausgebildet ist, dass er durch ein Strukturelement des Schlauchanschlussteils von einer Offenstellung, in der die Mutter auf dem Schlauchstutzen angeordnet ist, überführbar ist in eine Geschlossenstellung, in der ein Drehen der Mutter in Umfangsrichtung relativ zum Schlauchstutzen verhindert wird, wenn die Mutter auf dem Schlauchstutzen angeordnet ist. Der Schlauchstutzen kann insbesondere auf eine Mutter der weiter oben beschriebenen Art abgestimmt sein. Auf die oben stehenden Ausführungen zur Mutter wird im Kontext des Schlauchstutzens zur Vermeidung von Wiederholungen ausdrücklich Bezug genommen. Wie die Begriffe Offenstellung und Geschlossenstellung im Rahmen der Erfindung zu verstehen sind, wurde bereits im Kontext der erfindungsgemäßen Mutter erläutert. Auf diese Ausführungen wird im Kontext des Schlauchstutzens Bezug genommen.

Vorteilhafterweise weist der Schlauchstutzen eine Haltevorrichtung auf, die dazu ausgebildet ist, eine Axialbewegung der Mutter relativ zum Schlauchstutzen zu verhindern, wobei die Haltevorrichtung vorzugsweise zwei Halteelemente umfasst, die zwischen sich die Auflagefläche für die Mutter definieren. Vorzugsweise ist mindestens eines der Halteelemente als Flansch ausgebildet. Besonders bevorzugt sind beide Halteelemente als Flansche ausgebildet. Der oder die Flansche können durchgehend in Umfangsrichtung verlaufen. Es ist aber auch möglich, dass der oder die Flansche in Umfangsrichtung eine oder mehrere Unterbrechungen aufweisen.

Bei einer vorteilhaften Ausführungsform weist der Schlauchstutzen an seiner Außenseite wenigstens einen Abschnitt auf, der dazu vorgesehen ist, dem mindestens einen Klemmelement der Mutter zumindest teilweise als Widerlager zu dienen. Dieser Abschnitt ist vorzugsweise im Bereich der Auflagefläche angeordnet.

Vorzugsweise ist der Schlauchstutzen dazu ausgebildet, mit seiner Außenseite das Schlauchanschlussteil zu berühren, um elektrischen Durchgang zu erzeugen. Besonders bevorzugt ist der Schlauchstutzen dazu ausgebildet, mit einem seiner Halteelemente ein Schlauchanschlussteil zu berühren, um elektrischen Durchgang zu erzeugen.

Vorzugsweise ist der Schlauchstutzen für die Verwendung mit einem Kraftstoffschlauch, vorzugsweise einem Koaxialschlauch für Kraftstoffe, ausgelegt.

Gegenstand der Erfindung ist ferner ein Schlauchanschlussteil. Dieses sei nachstehend erläutert.

Bei dem erfindungsgemäßen Schlauchanschlussteil handelt es sich um ein Schlauchanschlussteil für einen Fluidschlauch, vorzugsweise für einen Flüssigkeitsschlauch, besonders bevorzugt für einen Kraftstoffzapfschlauch, wobei das Schlauchanschlussteil einen Fluidkanal umfasst an dessen einem Ende eine Verbindungsvorrichtung angeordnet ist, die eine flüssigkeitsdichte Verbindung mit einer oben beschriebenen Mutter erlaubt, wobei das Schlauchanschlussteil ein Strukturelement aufweist, das dazu ausgebildet ist, den Verdrehschutz der Mutter von einer Offenstellung in eine Geschlossenstellung zu überführen. Wie die Begriffe Offenstellung und Geschlossenstellung im Rahmen der Erfindung zu verstehen sind, wurde bereits im Kontext der erfindungsgemäßen Mutter erläutert. Auf diese Ausführungen wird im Kontext des Schlauchanschlussteils Bezug genommen.

Der Begriff Fluidkanal bezeichnet im Rahmen der Erfindung einen Kanal, der für die Durchleitung eines Fluids ausgelegt ist. Der Fluidkanal kann vorzugsweise eine im Wesentlichen zylindrische Form aufweisen.

Das Schlauchanschlussteil ist wie oben beschrieben auf eine Mutter abgestimmt. Dabei kann es sich um eine Mutter zur Anordnung auf einem Schlauchstutzen handeln, die eine Verbindungsvorrichtung umfasst, welche mit dem Schlauchanschlussteil flüssigkeitsdicht verbindbar ist, sowie eine Aufnahme für den Schlauchstutzen, mit einem ersten Ende und einem zweiten Ende, wobei die Aufnahme dazu ausgebildet ist, den Schlauchstutzen in Umfangsrichtung formschlüssig zu umfassen, derart, dass die Mutter und der Schlauchstutzen in Umfangsrichtung gegeneinander drehbar sind, wobei die Mutter einen Verdrehschutz aufweist, der so ausgebildet ist, dass er durch ein Strukturelement des Schlauchanschlussteils von einer Offenstellung, in der die Mutter auf dem Schlauchstutzen angeordnet ist, überführbar ist in eine Geschlossenstellung, in der ein Drehen der Mutter in Umfangsrichtung relativ zum Schlauchstutzen verhindert wird, wenn die Mutter auf dem Schlauchstutzen angeordnet ist. Das Schlauchanschlussteil kann insbesondere auf eine Mutter der weiter oben beschriebenen Art abgestimmt sein. Auf die oben stehenden Ausführungen zur Mutter wird im Kontext des Schlauchstutzens zur Vermeidung von Wiederholungen ausdrücklich Bezug genommen.

Vorzugsweise umfasst die Verbindungsvorrichtung des Schlauchanschlussteils ein Innengewinde, das mit einem korrespondierenden Außengewinde der Mutter verbunden werden kann.

Vorteilhafterweise ist das Strukturelement so angeordnet und dimensioniert, dass der Verdrehschutz der Mutter an einem bestimmten Punkt des Verbindungsvorgangs zwischen dem Schlauchanschlussteil und der Mutter durch das Strukturelement des Schlauchanschlussteils von der Offenstellung in die Geschlossenstellung überführt wird, wenn das Schlauchanschlussteil mit der Mutter verbunden wird. Dies hat den Vorteil, dass die Fixierung des Schlauchs an einem bestimmten Punkt des Verbindungsvorgangs erfolgt. Vorzugsweise liegt dieser Punkt gegen Ende des Verbindungsvorgangs. Das Schlauchanschlussteil ist vorzugsweise so ausgebildet, dass das Strukturelement erst dann mit der Mutter zusammenwirkt, um den Verdrehschutz von der Offenstellung in die Geschlossenstellung zu überführen, wenn das Schlauchanschlussteil mit der Mutter beinahe vollständig verbunden ist. Letzteres hat den Vorteil, dass der Schlauch erst gegen Ende des Verbindungsvorgangs ausgerichtet werden muss und mit geringem Aufwand in der gewünschten Ausrichtung fixiert werden kann.

Bei einer vorteilhaften Ausführungsform weist das Strukturelement mindestens ein Merkmal, vorzugsweise beide Merkmale, ausgewählt aus der nachfolgenden Merkmalsgruppe auf:
- das Strukturelement ist ringförmig, vorzugsweise kreisförmig,
- das Strukturelement ist im Bereich der Verbindungsvorrichtung des Schlauchanschlussteils angeordnet, wobei das Strukturelement vorzugsweise an den Abschluss des Innengewindes angrenzt;

Das Strukturelement kann vorzugsweise dazu ausgebildet sein, mit einer der oben beschriebenen Ausführungsformen der Mutter zusammenzuwirken, die mindestens ein Klemmelement umfasst, wobei das Strukturelement mindestens ein Merkmal, vorzugsweise mindestens zwei Merkmale, besonders bevorzugt alle drei Merkmale ausgewählt aus der nachfolgenden Merkmalsgruppe aufweist:
- das Strukturelement ist dazu ausgebildet, auf mindestens ein Klemmelement der Mutter zu wirken,
- das Strukturelement ist dazu ausgebildet, eine Klemmkraft, vorzugsweise eine radiale Klemmkraft, auf das mindestens eine Klemmelement auszuüben,
- das Strukturelement bewirkt eine Verringerung des Innendurchmessers des Schlauchanschlussteils, derart, dass auf das mindestens eine Klemmelement der Mutter eine Klemmkraft, vorzugsweise eine radiale Klemmkraft, ausgeübt wird, wenn das Schlauchanschlussteil mit der Mutter verbunden ist, wobei das Strukturelement vorzugsweise dazu ausgebildet ist direkten metallischen Kontakt mit einem Schlauchstutzen herzustellen.

Das oben genannte Merkmal, dass das Strukturelement dazu ausgebildet ist, direkten metallischen Kontakt mit einem Schlauchstutzen herzustellen, ist insbesondere für solche Länder bevorzugt, in welchen elektrischer Durchgang gefordert wird. Bei dem Schlauchstutzen kann es sich um einen Schlauchstutzen für einen Fluidschlauch, vorzugsweise für einen Flüssigkeitsschlauch, besonders bevorzugt für einen Kraftstoffzapfschlauch handeln, mit einem Rohransatz zum Befestigen des Fluidschlauchs, wobei die Außenseite des Schlauchstutzens eine Auflagefläche für eine Mutter, vorzugsweise für die weiter oben beschriebene Mutter, aufweist, wobei die Abmessungen des Schlauchstutzens so auf die Mutter abgestimmt sind, dass der Schlauchstutzen von der Mutter formschlüssig umfasst werden kann, derart, dass der Schlauchstutzen und die Mutter in Umfangsrichtung gegeneinander drehbar sind. Insbesondere kann es sich bei dem Schlauchstutzen um einen Schlauchstutzen der weiter oben beschriebenen Art handeln. Auf die oben stehenden Ausführungen zum Schlauchstutzen wird im Kontext des Schlauchanschlussteils zur Vermeidung von Wiederholungen ausdrücklich Bezug genommen.

In einer bevorzugten Ausführungsform der Erfindung, ist das Strukturelement des Schlauchanschlussteils dazu ausgelegt, direkt auf das mindestens eine Klemmelement der Mutter einzuwirken. In einer besonders bevorzugten Ausführungsform ist das Strukturelement dazu ausgelegt, das mindestens eine Klemmelement der Mutter mittels einer radialen Klemmkraft in der Klemmstellung zu halten. Wie der Begriff Klemmstellung im Rahmen der Erfindung zu verstehen ist, wurde bereits im Kontext der erfindungsgemäßen Mutter erläutert. Auf diese Ausführungen wird im Kontext des Schlauchanschlussteils Bezug genommen.

Vorzugsweise handelt es sich bei dem Schlauchanschlussteil um ein Schlauchanschlussteil für einen Kraftstoff- und/oder Gasschlauch, weiter vorzugsweise um einen Zapfsäulenanschluss, besonders bevorzugt um einen Zapfsäulenanschluss für einen Koaxialschlauch.

Es ist vorteilhaft, wenn das Schlauchanschlussteil so ausgebildet ist, dass die Verbindungsvorrichtung auch eine Verbindung mit einem Gegenstück erlaubt, das keinen erfindungsgemäßen Verdrehschutz aufweist. Dies ermöglicht ein schrittweises Nachrüsten von bestehenden Schlauchanschlüssen, indem der Schlauchanschluss zuerst mit einem erfindungsgemäßen Schlauchanschlussteil nachgerüstet wird, bevor eine Nachrüstung mit einer erfindungsgemäßen Mutter und einem erfindungsgemäßen Schlauchstutzen erfolgt.

Vorteilhafterweise weist das Schlauchanschlussteil mehrere Anschlüsse auf, von denen vorzugsweise mindestens einer eine drehbar gelagerte Mutter umfasst, wobei die drehbar gelagerte Mutter vorzugsweise ein Innengewinde aufweist. Bevorzugt weist das Schlauchanschlussteil mindestens zwei, besonders bevorzugt mindestens drei Anschlüsse auf, wobei einer der Anschlüsse als ein Gasausgangsnippel ausgebildet sein kann. Bei einer bevorzugten Ausführungsform weist das Schlauchanschlussteil jeweils einen Anschluss an beiden Enden des Fluidkanals und optional einen zwischen den Enden des Fluidkanals angeordneten dritten Anschluss auf, wobei es sich bei dem optionalen dritten Anschluss um einen Gasauslassnippel handeln kann. Das Schlauchanschlussteil kann eine in dem Fluidkanal angeordnete Zuleitung für den dritten Kanal umfassen.

Gegenstand der Erfindung ist zudem ein Kit für einen Schlauchanschluss umfassend eine oben beschriebene Mutter, einen oben beschriebenen Schlauchstutzen und ein oben beschriebenenes Schlauchanschlussteil.

In einer bevorzugten Kombination, ist die Mutter auf dem Schlauchstutzen angeordnet. Bei anderen vorteilhaften Ausführungsformen ist die Mutter nicht auf dem Schlauchstutzen angeordnet.

Eine für den erfindungsgemäßen Kit geeignete Mutter, sowie ein für den Kit geeignetes Schlauchanschlussteil und ein geeigneter Schlauchstutzen wurden bereits oben beschrieben. Auf diese Ausführungen wird im Kontext des erfindungsgemäßen Kits zur Vermeidung von Wiederholungen Bezug genommen. Im Rahmen des erfindungsgemäßen Kits sei hiermit jegliche Kombination von drei Komponenten aus der Gruppe bestehend aus einer oben beschriebenen Mutter, einem oben beschriebenen Schlauchstutzen und einem oben beschriebenen Schlauchanschlussteil explizit offenbart.

Die Erfindung sieht ferner die Verwendung einer oben beschriebenen Mutter mit einem oben beschriebenen Schlauchstutzen und einem oben beschriebenen Schlauchanschlussteil vor. Im Rahmen der erfindungsgemäßen Verwendung sei hiermit jegliche Kombination einer oben beschriebenen Mutter mit einem oben beschriebenen Schlauchstutzen und einem oben beschriebenen Schlauchanschlussteil explizit offenbart. Zur Vermeidung von Wiederholungen wird im Kontext der erfindungsgemäßen Verwendung ausdrücklich auf die obigen Ausführungen zur Mutter, zum Schlauchanschlussteil und zum Schlauchstutzen verwiesen.

Die Erfindung sieht ferner die Verwendung eines oben beschriebenen Schlauchstutzens mit einer oben beschriebenen Mutter und einem oben beschriebenen Schlauchanschlussteil vor. Im Rahmen der erfindungsgemäßen Verwendung sei hiermit jegliche Kombination eines oben beschriebenen Schlauchstutzen mit einer oben beschriebenen Mutter und einem oben beschriebenen Schlauchanschlussteils explizit offenbart. Zur Vermeidung von Wiederholungen wird im Kontext der erfindungsgemäßen Verwendung ausdrücklich auf die obigen Ausführungen zur Mutter, zum Schlauchanschlussteil und zum Schlauchstutzen verwiesen.

Die Erfindung sieht ferner die Verwendung eines oben beschriebenen Schlauchanschlussteils mit einer oben beschriebenen Mutter und einem oben beschriebenen Schlauchstutzens vor. Im Rahmen der erfindungsgemäßen Verwendung sei hiermit jegliche Kombination eines oben beschriebenen Schlauchanschlussteils mit einer oben beschriebenen Mutter und einem oben beschriebenen Schlauchstutzens explizit offenbart. Zur Vermeidung von Wiederholungen wird im Kontext der erfindungsgemäßen Verwendung ausdrücklich auf die obigen Ausführungen zur Mutter, zum Schlauchstutzen und zum Schlauchanschlussteil verwiesen.

Die Beschreibung sieht auch eine Anordnung, umfassend einen Schlauchstutzen für einen Fluidschlauch, vorzugsweise für einen Flüssigkeitsschlauch, besonders bevorzugt für einen Kraftstoffzapfschlauch, und eine Mutter vor, die nachstehend beschrieben wird.

Die erfindungsgemäße Anordnung umfasst
a) einen Schlauchstutzen mit einem ersten, als Rohransatz zum Befestigen des Fluidschlauchs ausgebildeten Ende und einem zweiten Ende, das eine Auflage für die Mutter aufweist und
b) eine Mutter mit einer Verbindungsvorrichtung für ein Schlauchanschlussteil,
wobei die Mutter den Schlauchstutzen an seinem zweiten Ende in Umfangsrichtung formschlüssig umfasst, derart, dass die Mutter und der Schlauchstutzen in Umfangsrichtung gegeneinander drehbar sind, wobei die Mutter einen Verdrehschutz aufweist, der von einer Offenstellung, in der die Mutter und der Schlauchstutzen im Umfangsrichtung gegeneinander drehbar sind, überführbar ist in eine Geschlossenstellung, in der ein Drehen der Mutter in Umfangsrichtung relativ zum Schlauchstutzen verhindert wird, wobei der Verdrehschutz und die Verbindungsvorrichtung am gleichen Ende der Mutter angeordnet sind. Wie die Begriffe Offenstellung und Geschlossenstellung im Rahmen der Erfindung zu verstehen sind, wurde bereits im Kontext der erfindungsgemäßen Mutter erläutert. Auf diese Ausführungen wird im Kontext der Anordnung Bezug genommen.

Bei einer bevorzugten Ausführungsform der Anordnung ist der Verdrehschutz an der Innenseite der Mutter im Bereich der Verbindungsvorrichtung angeordnet und/oder die Verbindungsvorrichtung ist an der Außenseite der Mutter angeordnet.

Vorzugsweise weist der Verdrehschutz mindestens ein, bevorzugt an der Innenseite der Mutter angeordnetes, Klemmelement auf, das von einer Offenstellung, die eine Drehbewegung der Mutter in Umfangsrichtung relativ zum Schlauchstutzen erlaubt, wenn die Mutter auf dem Schlauchstutzen angeordnet ist, in eine Klemmstellung überführbar ist, in der das Klemmelement, zur Verhinderung einer Drehbewegung der Mutter in Umfangsrichtung relativ zum Schlauchstutzen, gegen den Schlauchstutzen gedrückt wird, wenn die Mutter auf dem Schlauchstutzen angeordnet ist. Wie die Begriffe Offenstellung und Klemmstellung im Rahmen der Erfindung zu verstehen sind, wurde bereits im Kontext der erfindungsgemäßen Mutter erläutert. Auf diese Ausführungen wird im Kontext der Anordnung Bezug genommen.

Das mindestens eine Klemmelement ist vorzugsweise dazu ausgelegt, mittels einer Klemmkraft, bevorzugt einer radialen Klemmkraft, in der Klemmstellung gehalten zu werden.

Es kann vorgesehen sein, dass der Verdrehschutz mindestens zwei Klemmelemente umfasst. Vorteilhafterweise sind die Klemmelemente in Umfangsrichtung voneinander beabstandet. Die Abstände zwischen den Klemmelementen können jeweils gleich groß sein. Vorzugsweise umfasst der Verdrehschutz 2 bis 12, weiter vorzugsweise 4 bis 8, besonders bevorzugt 6 Klemmelemente, welche jeweils in Umfangsrichtung voneinander beabstandet sein können.

Vorteilhafterweise umfasst die Verbindungsvorrichtung ein Außengewinde, welches mit einem korrespondierenden Innengewinde eines Schlauchanschlussteils flüssigkeitsdicht verbindbar ist, wobei das Klemmelement oder die Klemmelemente in Axialrichtung über das Außengewinde hinausragen.

Es kann vorgesehen sein, dass die Verbindungsvorrichtung an der Außenseite der Mutter angeordnet ist und/oder das Klemmelement oder die Klemmelemente an der Innenseite der Mutter angeordnet sind.

Vorzugsweise sind das Klemmelement oder die Klemmelemente an der Innenseite der Mutter angeordnet. Dies erleichtert das Zusammenwirken mit dem Schlauchstutzen. Es ist vorteilhaft, wenn das Klemmelement oder die Klemmelemente, im Bereich der Verbindungsvorrichtung angeordnet sind. Besonders bevorzugt ist das Klemmelement oder die Klemmelemente an der Innenseite der Mutter angeordnet und die Verbindungsvorrichtung ist an der Außenseite der Mutter angeordnet, wobei sich die Verbindungsvorrichtung außerhalb der Aufnahme befindet.

Die Mutter kann aus Kunststoff, vorzugsweise aus einem elektrisch leitfähigen Kunststoff, besonders bevorzugt aus einem elektrisch leitfähigen Kunststoff mit einem elektrischen Widerstand gemäß EN 13617-2 kleiner 100 000 Ohm, vorzugsweise mit einem elektrischen Widerstand gemäß EN 13617-2 zwischen 200 und 1000 Ohm bestehen. Der Kunststoff ist vorzugsweise ausgewählt aus der Gruppe bestehend aus Polyamiden (PA) und Polyetheretherketonen (PEEK).

Die Mutter ist bevorzugt dazu ausgebildet, dass die Verbindung zwischen der Mutter und dem Schlauchanschlussteil einer Zugkraft von mindestens 2000 N über 2 min, vorzugsweise mindestens 2000 N über 5 min standhält. Die Messung erfolgt gemäß EM 13483 Anhang K, wobei die Kraft aufgebracht wird, indem die Klemmen der Prüfvorrichtung mit einer Geschwindigkeit von (75±5) mm/min auseinandergezogen werden.

Vorteilhafterweise weist die Mutter Verstärkungselemente auf, wobei die Verstärkungselemente vorzugsweise in Umfangsrichtung voneinander beabstandet sind und/oder Vorzugsweise an der Innenseite der Mutter, bevorzugt im Bereich des ersten Endes der Aufnahme, angeordnet sind und/oder vorzugsweise im Beeich der Verbindungsvorrichtung angeordnet sind. Die Anordnung der Verstärkungselemente im Bereich der Verbindungsvorrichtung dient der Erhöhung der Zugfestigkeit der Verbindung zwischen der Mutter und dem Schlauchanschlussteil.

Vorteilhafterweise ist die Mutter dazu ausgelegt mit einem Schlauchanschlussteil für einen Kraftstoff- und/oder Gasschlauch, vorzugsweise mit einem Zapfsäulenanschluss, besonders bevorzugt mit einem Zapfsäulenanschluss für einen Koaxialschlauch verbunden zu werden.

Die Mutter kann als Mehrkantmutter, vorzugsweise als Dreikant-, Vierkant-, Sechskant-, Achtkant- oder Zwölfkantmutter, besonders bevorzugt als Sechskantmutter, ausgebildet sein. Vorteilhafterweise ist die Mehrkantstruktur an der Außenseite der Mutter im Bereich des zweiten Endes der Aufnahme angeordnet.

Vorteilhafterweise ragt der Schlauchstutzen in axialer Richtung über die beiden Enden der Mutter hinaus.

Bei dem Schlauchstutzen der Anordnung handelt es sich um einen Schlauchstutzen für einen Fluidschlauch, vorzugsweise für einen Flüssigkeitsschlauch, besonders bevorzugt für einen Kraftstoffzapfschlauch.

Vorteilhafterweise weist der Schlauchstutzen eine Haltevorrichtung auf, die dazu ausgebildet ist, eine Axialbewegung der Mutter relativ zum Schlauchstutzen zu verhindern, wobei die Haltevorrichtung vorzugsweise zwei Halteelemente umfasst, die zwischen sich die Auflagefläche für die Mutter definieren. Vorzugsweise ist mindestens eines der Halteelemente als Flansch ausgebildet. Besonders bevorzugt sind beide Halteelemente als Flansche ausgebildet. Der oder die Flansche können durchgehend in Umfangsrichtung verlaufen.

Es ist aber auch möglich, dass der oder die Flansche in Umfangsrichtung eine oder mehrere Unterbrechungen aufweisen.

Bei einer vorteilhaften Ausführungsform weist der Schlauchstutzen an seiner Außenseite wenigstens einen Abschnitt auf, der dazu vorgesehen ist, dem mindestens einen Klemmelement der Mutter zumindest teilweise als Widerlager zu dienen. Dieser Abschnitt ist vorzugsweise im Bereich der Auflagefläche angeordnet.

Vorzugsweise ist der Schlauchstutzen dazu ausgebildet, mit seiner Außenseite das Schlauchanschlussteil zu berühren, um elektrischen Durchgang zu erzeugen. Besonders bevorzugt ist der Schlauchstutzen dazu ausgebildet, mit einem seiner Halteelemente ein Schlauchanschlussteil zu berühren, um elektrischen Durchgang zu erzeugen.

Vorzugsweise ist der Schlauchstutzen für die Verwendung mit einem Kraftstoffschlauch, vorzugsweise einem Koaxialschlauch für Kraftstoffe, ausgelegt.

Nachfolgend werden vorteilhafte Ausführungsformen der Erfindung anhand der Zeichnungen beispielhaft beschrieben. Es zeigen:
- Fig. 1:: Eine Ausführungsform einer erfindungsgemäßen Mutter.
- Fig. 2:: Eine Ausführungsform eines erfindungsgemäßen Schlauchstutzens.
- Fig. 3:: Eine Ausführungsform eines erfindungsgemäßen Schlauchanschlussteils.
- Fig. 4:: Eine Anordnung umfassend eine Mutter, einen Schlauchstutzen und ein Schlauchanschlussteil, wobei sich der Verdrehschutz der Mutter in der Offenstellung befindet.
- Fig. 5:: Eine Anordnung umfassend eine Mutter, einen Schlauchstutzen und ein Schlauchanschlussteil, wobei sich der Verdrehschutz der Mutter in der Geschlossenstellung befindet.
- Fig. 6:: Eine Ausführungsform eines erfindungsgemäßen Schlauchanschlussteils zusammen mit einem herkömmlichen Schlauch und Schlauchanschluss.
- Fig. 7:: Eine Anordnung umfassend einen Schlauchstutzen und eine auf dem Schlauchstutzen angeordnete Mutter.

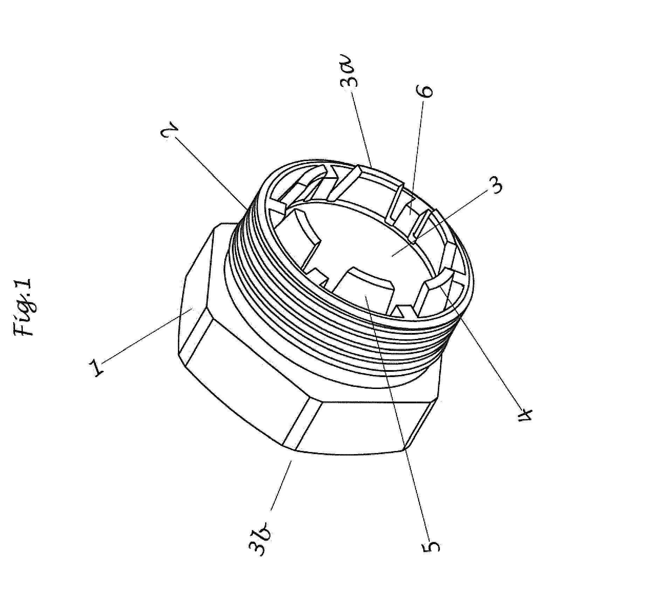

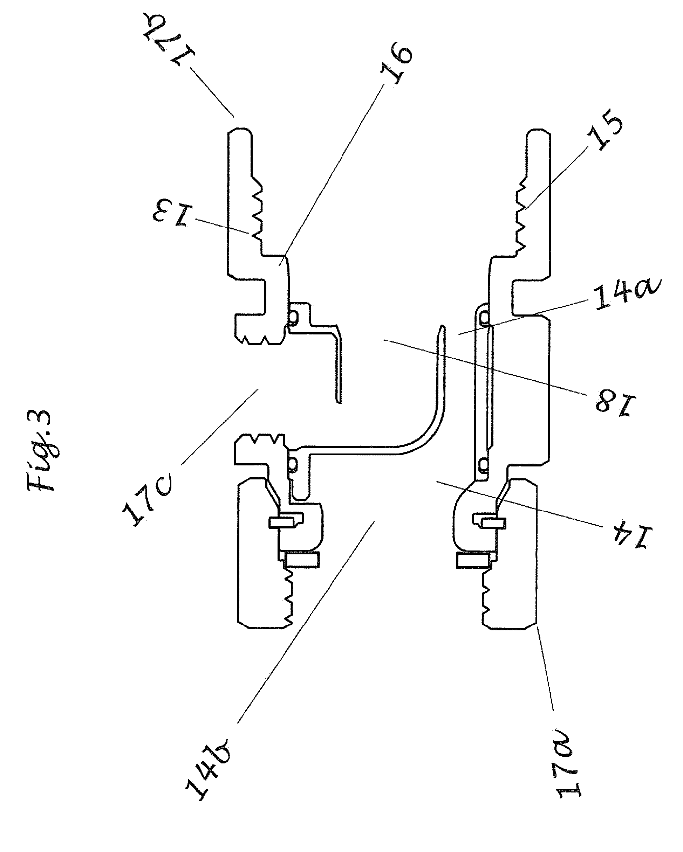

Figur 1 zeigt eine vorteilhafte Ausführungsform einer erfindungsgemäßen Mutter (1). Die Mutter (1) weist eine Verbindungsvorrichtung (2) auf, welche als ein Außengewinde ausgebildet ist, das mit einem korrespondierenden Innengewinde des in Fig. 3 gezeigten Schlauchanschlussteils flüssigkeitsdicht verbindbar ist.

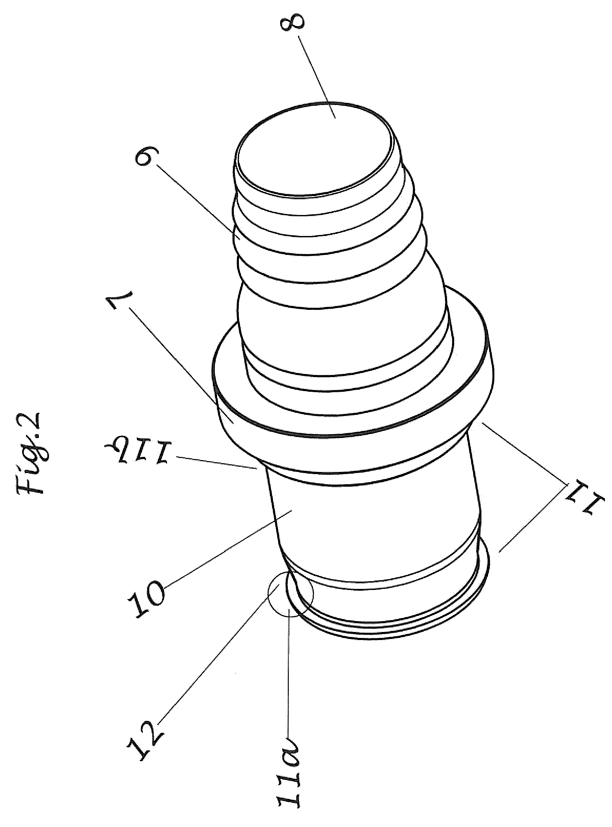

Die Mutter weist zudem eine Aufnahme (3) für den in Fig. 2 gezeigten Schlauchstutzen (7) auf, mit einem ersten Ende (3a) und einem zweiten Ende (3b), wobei die Aufnahme dazu ausgebildet ist, den in Fig. 2 gezeigten Schlauchstutzen (7) in Umfangsrichtung formschlüssig zu umfassen, derart, dass die Mutter (1) und der Schlauchstutzen (7) in Umfangsrichtung gegeneinander drehbar sind. Die Aufnahme (3) erstreckt sich über die gesamte axiale Ausdehnung der Mutter (1).

Die Mutter (1) weist einen Verdrehschutz (4) auf, der so ausgebildet ist, dass der durch ein Strukturelement des in Fig. 3 gezeigten Schlauchanschlussteils von einer Offenstellung, in der die Mutter (1) und der in Fig. 2 gezeigte Schlauchstutzen (7) in Umfangsrichtung gegeneinander drehbar sind, wenn die Mutter (1) auf dem Schlauchstutzen (7) angeordnet ist, überführbar ist in eine Geschlossenstellung, in der ein Drehen der Mutter (1) in Umfangsrichtung relativ zum Schlauchstutzen (7) verhindert wird, wenn die Mutter (1) auf dem Schlauchstutzen (7) angeordnet ist.

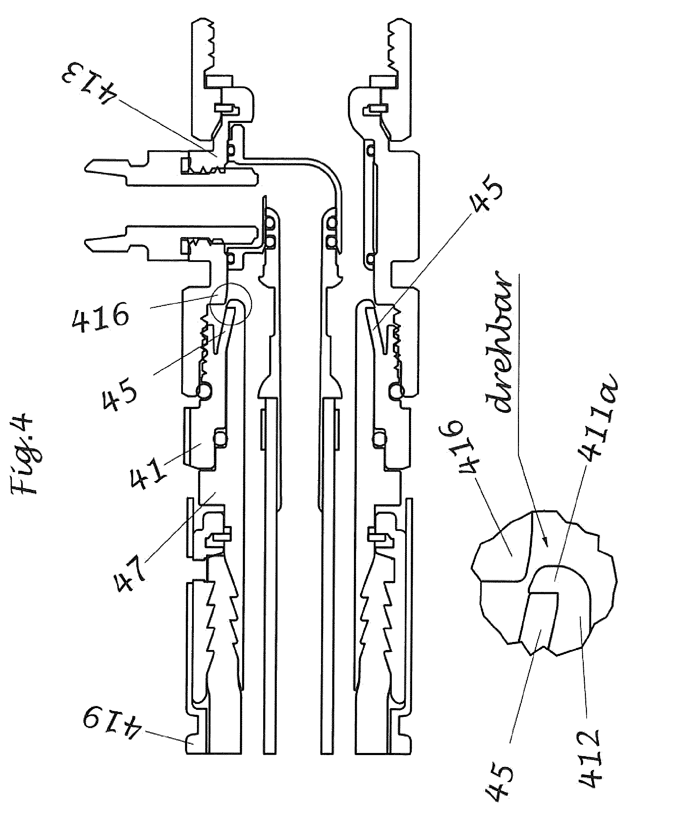

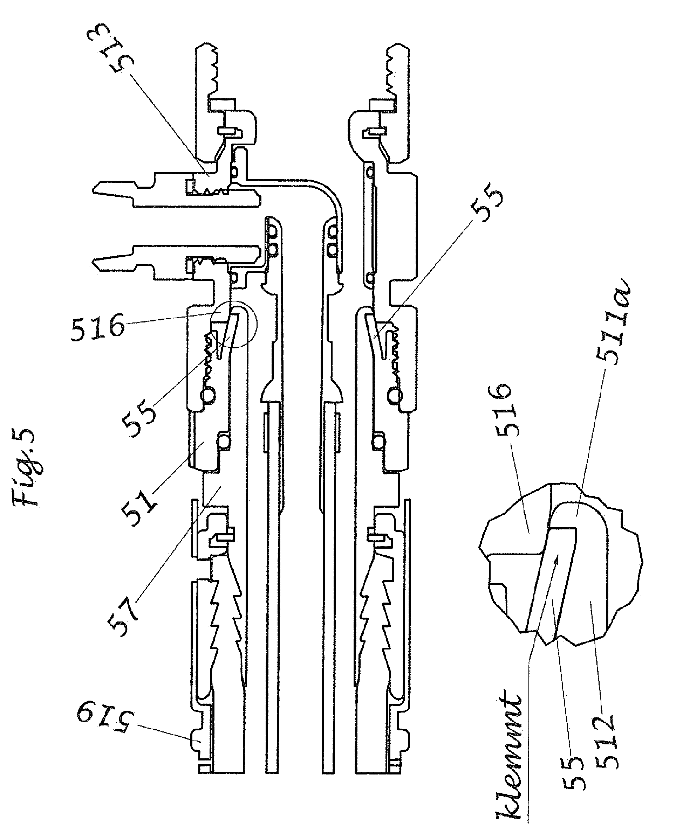

Die Mutter (1) in Fig. 1 ist so ausgebildet, dass der Verdrehschutz (4) an einem bestimmten Punkt des Verbindungsvorgangs zwischen der Mutter (1) und dem in Fig. 3 gezeigten Schlauchanschlussteil durch das Strukturelement des Schlauchanschlussteils von der Offenstellung in die Geschlossenstellung überführt wird, wenn die Mutter (1) mit dem Schlauchanschlussteil verbunden wird, wie in den Figuren 4 und 5 dargestellt. Dieser Punkt liegt gegen Ende des Verbindungsvorgangs.

Der Verdrehschutz (4) ist an der Innenseite der Mutter (1) im Bereich des ersten Endes (3a) der Aufnahme (3) angeordnet, wobei der Verdrehschutz (4) in die Aufnahme (3) hineinragt, und die Verbindungsvorrichtung (2) ist an der Außenseite der Mutter (1) im Bereich des ersten Endes (3a) der Aufnahme (3) angeordnet, wobei sich die Verbindungsvorrichtung (2) außerhalb der Aufnahme (3) befindet.

Der Verdrehschutz (4) weist 6 voneinander in Umfangsrichtung beabstandete Klemmelemente (5) auf, die jeweils von einer Offenstellung, die eine Drehbewegung der Mutter in Umfangsrichtung relativ zu dem in Fig. 2 gezeigten Schlauchstutzen erlaubt, wenn die Mutter (1) auf dem Schlauchstutzen angeordnet ist, in eine Klemmstellung überführbar sind, in der das jeweilige Klemmelement (5), zur Verhinderung einer Drehbewegung der Mutter (1) in Umfangsrichtung relativ zum Schlauchstutzen, gegen den Schlauchstutzen gedrückt wird, wenn die Mutter (1) auf dem Schlauchstutzen angeordnet ist, wie in den Fig. 4 und 5 gezeigt.

Wie aus den Figuren ersichtlich, sind die Klemmelemente (5) jeweils so dimensioniert und angeordnet, dass das Strukturelement des in Fig. 3 gezeigten Schlauchanschlussteils direkt auf die Klemmelemente (5) wirken kann.

Dabei ist die Mutter (1) so ausgebildet, dass das jeweilige Klemmelement (5) an einem bestimmten Punkt des Verbindungsvorgangs zwischen der Mutter (1) und dem in Fig. 3 gezeigten Schlauchanschlussteil durch ein Zusammenwirken mit dem Strukturelement des Schlauchanschlussteils von der Offenstellung in die Klemmstellung überführt wird, wenn die Mutter (1) mit dem Schlauchanschlussteil verbunden wird. Dieser Punkt liegt gegen Ende des Verbindungsvorgangs. Dabei ist jedes der Klemmelemente (5) so angeordnet und dimensioniert, dass es erst dann mit dem Strukturelement des Schlauchanschlussteils zusammenwirkt, um das Klemmelement (5) von der Klemmstellung in die Offenstellung zu überführen, wenn die Mutter (1) mit dem Schlauchanschlussteil beinahe vollständig verbunden ist. Dies ist in den Figuren 4 und 5 dargestellt.

Die Klemmelemente (5) sind dazu ausgelegt, durch direktes Einwirken des Strukturelements des in Fig. 3 gezeigten Schlauchanschlussteils mittels einer radialen Klemmkraft in der Klemmstellung gehalten zu werden.

Wie aus Fig. 1 ersichtlich sind die Klemmelemente (5) an der Innenseite der Mutter (1) angeordnet und ragen in Axialrichtung über das Außengewinde (2) hinaus.

Die gezeigte Mutter (1) besteht aus einem elektrisch leitfähigen Kunststoff (Polyamid) mit einem elektrischen Widerstand gemäß EN 13617-2 zwischen 200 und 1000 Ohm.

Die Mutter (1) weist Verstärkungselemente (6) auf, wobei die Verstärkungselemente (6) in Umfangsrichtung voneinander beabstandet sind und an der Innenseite der Mutter (1) im Bereich des ersten Endes (3a) der Aufnahme (3), angeordnet sind. Bei der in Fig. 3 gezeigten Ausführungsform sind die Verstärkungselemente (6) somit im Bereich der Verbindungsvorrichtung (2) angeordnet.

Die Verbindungsvorrichtung (2) der Mutter (1) ist so ausgebildet, dass sie auch eine Verbindung mit einem Schlauchanschlussteil erlaubt, das kein erfindungsgemäßes Strukturelement aufweist.

Die in Fig. 1 gezeigte Mutter (1) ist auf den in Fig. 2 gezeigten Schlauchstutzen (7) aufsteckbar, wobei die Klemmelemente (5) der Mutter als Rastelemente ausgebildet sind, derart, dass diese mit einem Halteelement (11a) des in Fig. 2 gezeigten Schlauchstutzens (7) zusammenwirken können, um die Mutter (1) auf dem Schlauchstutzen (7) in Axialrichtung zu fixieren.

Die Mutter ist als Sechskantmutter ausgebildet, wobei die Sechskantstruktur an der Außenseite der Mutter (1) im Bereich des zweiten Endes (3b) der Aufnahme (3) angeordnet ist.

Figur 2 zeigt eine vorteilhafte Ausführungsform eines erfindungsgemäßen Schlauchstutzens (7) der für die Verwendung mit einem Koaxialschlauch für Kraftstoff (nicht gezeigt) ausgelegt ist. Der Schlauchstutzen (7) weist einen Durchgang (8) für ein Fluid und einen Rohransatz (9) zum Befestigen des Schlauchs auf.

Die Außenseite des Schlauchstutzens (7) weist eine Auflagefläche (10) für die in Fig. 1 gezeigte Mutter (1) auf, wobei die Abmessungen des Schlauchstutzens (7) so auf die in Fig. 1 gezeigte Mutter (1) abgestimmt sind, dass der Schlauchstutzen (7) von der Mutter (1) formschlüssig umfasst werden kann, derart, dass der Schlauchstutzen (7) und die Mutter (1) in Umfangsrichtung gegeneinander drehbar sind.

Der Schlauchstutzen (7) weist eine Haltevorrichtung (11) auf, die dazu ausgebildet ist, eine Axialbewegung der in Fig. 1 gezeigten Mutter (1) relativ zum Schlauchstutzen (7) zu verhindern, wobei die Haltevorrichtung zwei Halteelemente (11a, 11b) umfasst, die zwischen sich die Auflagefläche (10) für die Mutter (1) definieren. Beide Halteelemente (11a, 11b) sind als in Umfangsrichtung verlaufende durchgehende Flansche ausgebildet.

Der in Fig. 2 gezeigte Schlauchstutzen (7) weist an seiner Außenseite wenigstens einen Abschnitt (12) auf, der dazu vorgesehen ist, den Klemmelementen (5) der in Fig. 1 gezeigten Mutter (1) zumindest teilweise als Widerlager zu dienen. Wie aus Fig. 2 zu sehen, ist dieser Abschnitt (12) im Bereich der Auflagefläche (10) angeordnet.

Figur 3 zeigt eine vorteilhafte Ausführungsform eines erfindungsgemäßen Schlauchanschlussteils (13).

Bei dem gezeigten Schlauchanschlussteil (13) handelt es sich um einen Zapfsäulenanschluss für einen Koaxialschlauch (nicht gezeigt). Das Schlauchanschlussteil (13) umfasst einen Fluidkanal (14) an dessen einem Ende (14a) eine Verbindungsvorrichtung (15) angeordnet ist, die als ein Innengewinde ausgebildet ist, das mit dem korrespondierenden Außengewinde (2) der in Fig. 1 gezeigten Mutter (1) flüssigkeitsdicht verbunden werden kann.
Das Schlauchanschlussteil (13) weist ein Strukturelement (16) auf, das dazu ausgebildet ist, den Verdrehschutz (4) der in Fig. 1 gezeigten Mutter (1) von einer Offenstellung in eine Geschlossenstellung zu überführen.

Das Strukturelement (16) ist so angeordnet und dimensioniert, dass der Verdrehschutz (4) der in Fig. 1 gezeigten Mutter (1) an einem bestimmten Punkt des Verbindungsvorgangs zwischen dem Schlauchanschlussteil (13) und der Mutter (1) durch das Strukturelement (16) des Schlauchanschlussteils (13) von der Offenstellung in die Geschlossenstellung überführt wird, wenn das Schlauchanschlussteil (13) mit der Mutter (1) verbunden wird. Dieser Punkt liegt gegen Ende des Verbindungsvorgangs, wobei das Schlauchanschlussteil (13) so ausgebildet ist, dass das Strukturelement (16) erst dann mit der Mutter (1) zusammenwirkt, um den Verdrehschutz (4) von der Offenstellung in die Geschlossenstellung zu überführen, wenn das Schlauchanschlussteil (13) mit der Mutter (1) beinahe vollständig verbunden ist. Dies ist in den Figuren 4 und 5 grafisch erläutert.

Das in Fig. 3 gezeigte Strukturelement (16) ist kreisförmig und im Bereich der Verbindungsvorrichtung (15) des Schlauchanschlussteils (13) angeordnet, wobei das Strukturelement (16) an den Abschluss des Innengewindes (15) angrenzt.

Das Strukturelement (16) ist dazu ausgebildet, auf die Klemmelemente (5) der in Fig. 1 gezeigten Mutter (1) zu wirken, indem es eine radiale Klemmkraft auf die Klemmelemente (5) ausübt, wie in Fig. 5 gezeigt.

Insbesondere bewirkt das Strukturelement (16) eine Verringerung des Innendurchmessers des Schlauchanschlussteils (13), derart, dass auf die Klemmelemente (5) der in Fig. 1 gezeigten Mutter (1) eine radiale Klemmkraft ausgeübt wird, wenn das Schlauchanschlussteil (13) mit der Mutter (1) verbunden ist wie in Fig. 5 gezeigt.

Das Strukturelement (16) des Schlauchanschlussteils (13) ist dazu ausgelegt, direkt auf die Klemmelemente (5) der Mutter (1) einzuwirken. Insbesondere ist dazu ausgelegt, die Klemmelemente (5) der Mutter (1) mittels einer radialen Klemmkraft in der Klemmstellung zu halten, wie aus Fig. 5 ersichtlich.

Das Schlauchanschlussteil (13) ist so ausgebildet, dass die Verbindungsvorrichtung (15) auch eine Verbindung mit einem Gegenstück erlaubt, das keinen erfindungsgemäßen Verdrehschutz aufweist.

Das gezeigte Schlauchanschlussteil (13) weist jeweils einen Anschluss (17a, 17b) an beiden Enden (14a, 14b) des Fluidkanals (14) und einen zwischen den Enden (14a, 14b) des Fluidkanals (14) angeordneten dritten Anschluss (17c) auf, bei dem es sich um einen Gasauslassnippel handelt. Ebenfalls gezeigt ist eine innerhalb des Fluidkanals (14) angeordnete Zuleitung (18) zu dem dritten Anschluss (17c).

Figuren 4 und 5 zeigen das Zusammenwirken der in Fig. 1 gezeigten Mutter (1, 41, 51) mit dem in Fig. 2 gezeigten Schlauchstutzen (7, 47, 57) und dem in Fig. 3 gezeigten Schlauchanschlussteil (13, 413, 513). Die obere Abbildung zeigt jeweils die Teile in ihrer Gesamtheit, während die untere Abbildung einen vergrößerten Ausschnitt darstellt, der das Zusammenwirken der Klemmelemente (5, 45, 55) mit dem Strukturelement (16, 416, 516) zeigt. Ebenfalls dargestellt ist ein Halteelement (11a, 411a, 511a) des Schlauchstutzens (7, 47, 57) sowie ein Abschnitt (12, 412, 512) an der Außenseite des Schlauchstutzens, der dazu vorgesehen ist, den Klemmelementen als Widerlager zu dienen. Fig. 4 zeigt dabei die Klemmelemente (45) in Offenstellung und Fig. 5 zeigt die Klemmelemente (55) in Geschlossenstellung. Das Halteelement 511a hat metallischen Kontakt zu Strukturelement 516.

Wie aus Fig. 4 ersichtlich kann die auf dem Schlauchstutzen (47) angeordnete Mutter (41) mit dem Schlauchanschlussteil (413) beispielsweise mittels Handmontage beinahe weitgehend verbunden werden, während die Klemmelemente (45) in der Offenstellung bleiben. Dies erlaubt ein Ausrichten des Schlauchs (419). Sodann kann, wie in Fig. 5 gezeigt, das Strukturelement (516) an einem bestimmten Punkt gegen Ende des Verbindungsvorgangs, nämlich, wenn die Mutter (51) mit dem Schlauchanschlussteil (513) beinahe vollständig verbunden ist, beispielsweise mittels Schlüsselmontage, die Klemmelemente (55) in die Klemmstellung überführen und diese für die Dauer der Verbindung mittels einer radialen Klemmkraft in der Klemmstellung halten.

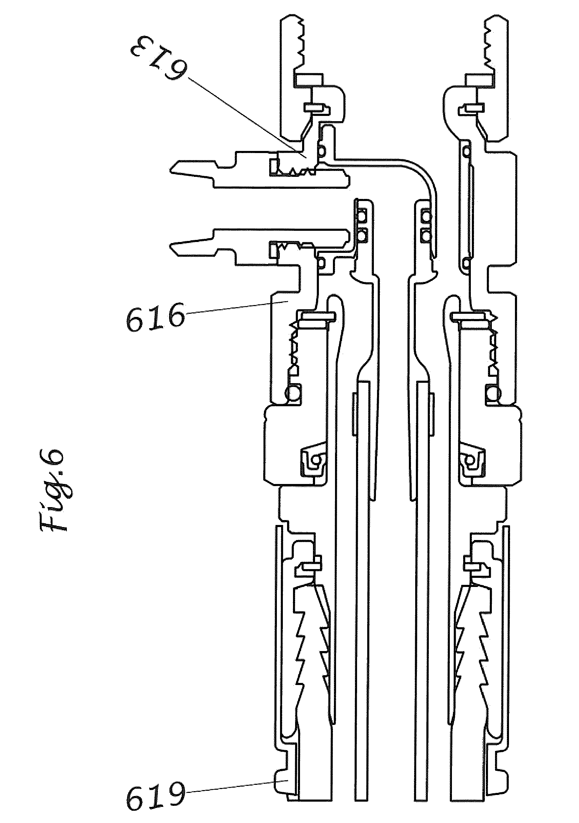

Figur 6 zeigt das Zusammenwirken eines herkömmlichen Schlauchanschlusses 619 ohne Positioniermöglichkeit und Verdrehschutz mit einem erfindungsgemäßen Schlauchanschlussteil 613, umfassend Strukturelement 616, das so ausgebildet ist, dass die Verbindungsvorrichtung auch eine Verbindung mit einem Gegenstück erlaubt, das keinen erfindungsgemäßen Verdrehschutz aufweist. Dies ermöglicht ein schrittweises Nachrüsten von bestehenden Schlauchanschlüssen, indem der Schlauchanschluss zuerst mit einem erfindungsgemäßen Schlauchanschlussteil nachgerüstet wird, bevor eine Nachrüstung mit einer erfindungsgemäßen Mutter und einem erfindungsgemäßen Schlauchstutzen erfolgt.

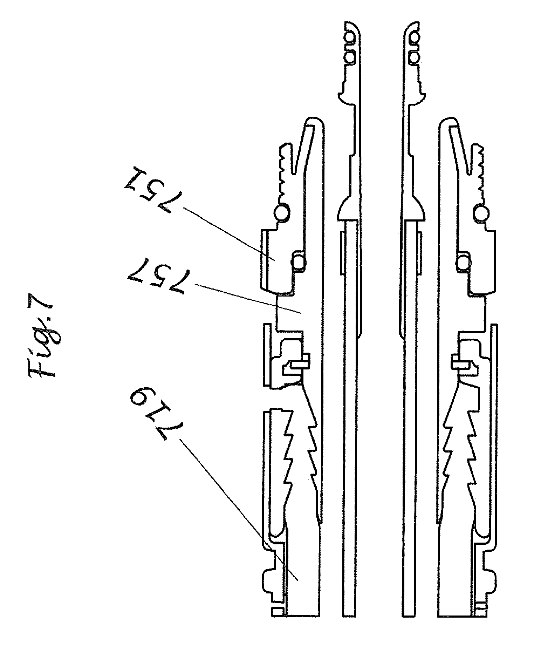

Figur 7 zeigt eine Ausführungsform umfassend einen erfindungsgemäßen Schlauchstutzen (757) und eine auf dem Schlauchstutzen angeordnete Mutter (751).

## Patentansprüche

1. Kombination umfassend:
a) ein Schlauchanschlussteil (13) für einen Fluidschlauch;
b) einen Schlauchstutzen (7) für einen weiteren Fluidschlauch;
und
c) eine Mutter (1) zur Anordnung auf dem Schlauchstutzen (7);
wobei
i) die Mutter eine Verbindungsvorrichtung (2) aufweist, welche mit dem Schlauchanschlussteil (13) flüssigkeitsdicht verbindbar ist; wobei die Mutter eine Aufnahme (3) für den Schlauchstutzen (7) aufweist, wobei die Aufnahme (3) ein erstes Ende (3a) und ein zweites Ende (3b) aufweist, wobei die Aufnahme (3) dazu ausgebildet ist, den Schlauchstutzen (7) in Umfangsrichtung formschlüssig zu umfassen, derart, dass die Mutter (1) und der Schlauchstutzen (7) in Umfangsrichtung gegeneinander drehbar sind; wobei die Mutter ferner einen Verdrehschutz (4) aufweist, der so ausgebildet ist, dass er durch ein Strukturelement (16) des Schlauchanschlussteils (13) von einer Offenstellung, in der die Mutter (1) und der Schlauchstutzen (7) in Umfangsrichtung gegeneinander drehbar sind, wenn die Mutter (1) auf dem Schlauchstutzen (7) angeordnet ist, überführbar ist in eine Geschlossenstellung, in der ein Drehen der Mutter (1) in Umfangsrichtung relativ zum Schlauchstutzen (7) verhindert wird, wenn die Mutter (1) auf dem Schlauchstutzen (7) angeordnet ist;
ii) der Schlauchstutzen (7) einen Rohransatz (9) zum Befestigen des weiteren Fluidschlauchs aufweist, wobei die Außenseite des Schlauchstutzens eine Auflagefläche (10) für die Mutter (1) aufweist, wobei die Abmessungen des Schlauchstutzens (7) so auf die Mutter (1) abgestimmt sind, dass der Schlauchstutzen (7) von der Mutter (1) in Umfangsrichtung formschlüssig umfasst werden kann, derart, dass der Schlauchstutzen (7) und die Mutter (1) in Umfangsrichtung gegeneinander drehbar sind;
iii) und das Schlauchanschlussteil (13) einen Fluidkanal (14) umfasst, an dessen einem Ende (14a) eine Verbindungsvorrichtung (15) angeordnet ist, welche eine flüssigkeitsdichte Verbindung mit der Mutter (1) erlaubt, wobei die Verbindungsvorrichtung (15) vorzugsweise ein Innengewinde umfasst, das mit einem korrespondierenden Außengewinde der Mutter (1) verbunden werden kann, wobei das Schlauchanschlussteil (13) das Strukturelement (16) aufweist, das dazu ausgebildet ist, den Verdrehschutz (4) der Mutter (1) von der Offenstellung in die Geschlossenstellung zu überführen.

2. Kombination nach Anspruch 1, **dadurch gekennzeichnet, dass** die Mutter (1) so ausgebildet ist, dass der Verdrehschutz (4) an einem bestimmten Punkt des Verbindungsvorgangs zwischen der Mutter (1) und dem Schlauchanschlussteil (13) durch das Strukturelement (16) des Schlauchanschlussteils (13) von der Offenstellung in die Geschlossenstellung überführt wird, wenn die Mutter (1) mit dem Schlauchanschlussteil (13) verbunden wird; wobei der Punkt vorzugsweise gegen Ende des Verbindungsvorgangs liegt, wobei die Mutter (1) vorzugsweise so ausgebildet ist, dass der Verdrehschutz(4) erst dann mit dem Strukturelement (16) des Schlauchanschlussteils (13) zusammenwirkt, um den Verdrehschutz (4) von der Offenstellung in die Geschlossenstellung zu überführen, wenn die Mutter (1) mit dem Schlauchanschlussteil (13) beinahe vollständig verbunden ist.

3. Kombination nach einem der Ansprüche 1 oder 2, **dadurch gekennzeichnet, dass** der Verdrehschutz (4) der Mutter (1) mindestens ein, bevorzugt an der Innenseite der Mutter (1) angeordnetes, Klemmelement (5) umfasst, das von der Offenstellung, die eine Drehbewegung der Mutter (1) in Umfangsrichtung relativ zum Schlauchstutzen (7) erlaubt, wenn die Mutter (1) auf dem Schlauchstutzen (7) angeordnet ist, in eine Klemmstellung überführbar ist, in der das mindestens eine Klemmelement (5), zur Verhinderung einer Drehbewegung der Mutter (1) in Umfangsrichtung relativ zum Schlauchstutzen (7), gegen den Schlauchstutzen (7) gedrückt wird, wenn die Mutter (1) auf dem Schlauchstutzen (7) angeordnet ist, wobei das mindestens eine Klemmelement (5) vorzugsweise dazu ausgelegt ist, mittels einer Klemmkraft, bevorzugt einer radialen Klemmkraft, in der Klemmstellung gehalten zu werden.

4. Kombination nach Anspruch 3, wobei
a) der Verdrehschutz (4) der Mutter (1) mindestens zwei, vorzugsweise 2 bis 12 bevorzugt in Umfangsrichtung voneinander beabstandete, vorzugsweise 4 bis 8 bevorzugt in Umfangsrichtung voneinander beabstandete, besonders bevorzugt 6 bevorzugt in Umfangsrichtung voneinander beabstandete Klemmelemente (5) umfasst und/oder
b) die Verbindungsvorrichtung (2) der Mutter (1) ein Außengewinde umfasst, welches mit einem korrespondierenden Innengewinde des Schlauchanschlussteils (13) flüssigkeitsdicht verbindbar ist, wobei vorzugsweise das Klemmelement (5) oder die Klemmelemente (5) in Axialrichtung über das Außengewinde hinausragen und/oder
c) die Verbindungsvorrichtung (2) der Mutter (1) an der Außenseite der Mutter (1) im Bereich des ersten Endes (3a) der Aufnahme (3) angeordnet ist und/oder das Klemmelement (5) oder die Klemmelemente (5) an der Innenseite der Mutter (1) im Bereich des ersten Endes (3a) der Aufnahme (3) angeordnet sind und/oder
d) sich die Aufnahme (3) für den Schlauchstutzen (7) über die gesamte axiale Ausdehnung der Mutter (1) erstreckt.

5. Kombination nach einem der Ansprüche 1 bis 4, **dadurch gekennzeichnet, dass** die Mutter (1) aus Kunststoff, vorzugsweise aus einem elektrisch leitfähigen Kunststoff, besonders bevorzugt aus einem elektrisch leitfähigen Kunststoff mit einem elektrischen Widerstand gemäß EN 13617-2 zwischen 200 und 1000 Ohm besteht, wobei der Kunststoff vorzugsweise ausgewählt ist aus der Gruppe bestehend aus Polyamiden (PA) und Polyetheretherketonen (PEEK).

6. Kombination nach einem der Ansprüche 1 bis 5, wobei die Mutter (1) dazu ausgebildet ist, dass die Verbindung zwischen der Mutter (1) und dem Schlauchanschlussteil (13) Zugkräften (gemessen gemäß EM 13483 Anhang K) von mindestens 2000 N über 2 min, vorzugsweise mindestens 2000 N über 5 min standhält.

7. Kombination nach einem der Ansprüche 1 bis 6, **dadurch gekennzeichnet, dass** die Mutter (1) Verstärkungselemente (6) aufweist, wobei die Verstärkungselemente (6) vorzugsweise in Umfangsrichtung voneinander beabstandet sind und/oder vorzugsweise an der Innenseite der Mutter (1), bevorzugt im Bereich des ersten Endes (3a) der Aufnahme (3), angeordnet sind und/oder vorzugsweise im Bereich der Verbindungsvorrichtung (2) angeordnet sind.

8. Kombination nach einem der Ansprüche 1-7, **dadurch gekennzeichnet, dass** der Schlauchstutzen (7) eine Haltevorrichtung (11) aufweist, die dazu ausgebildet ist, eine Axialbewegung der Mutter (1) relativ zum Schlauchstutzen (7) zu verhindern, wobei die Haltevorrichtung (11) vorzugsweise zwei Halteelemente (11a, 11b) umfasst, die zwischen sich die Auflagefläche (10) für die Mutter (1) definieren, wobei bevorzugt mindestens eines der Halteelemente (11a, 11b), besonders bevorzugt beide Halteelemente (11a, 11b) als Flansch bzw. Flansche ausgebildet sind, wobei der Flansch oder die Flansche vorzugsweise durchgehend in Umfangsrichtung verlaufen, wobei der Schlauchstutzen (7) weiter vorzugsweise dazu ausgebildet ist, mit seiner Außenseite ein Schlauchanschlussteil (13) zu berühren, um elektrischen Durchgang zu erzeugen, wobei der Schlauchstutzen (7) besonders bevorzugt dazu ausgebildet ist, mit einem seiner Halteelemente (11a) ein Schlauchanschlussteil (13) zu berühren, um elektrischen Durchgang zu erzeugen.

9. Kombination nach Anspruch 3, **dadurch gekennzeichnet, dass** der Schlauchstutzen (7) an seiner Außenseite wenigstens einen Abschnitt (12) aufweist, der dazu vorgesehen ist, dem mindestens einem Klemmelement (5) der Mutter (1) zumindest teilweise als Widerlager zu dienen, wobei der wenigstens eine Abschnitt (12), der dazu vorgesehen ist, dem mindestens einem Klemmelement (5) der Mutter (1) zumindest teilweise als Widerlager zu dienen, vorzugsweise im Bereich der Auflagefläche (10) angeordnet ist.

10. Kombination nach einem der Ansprüche 1-9, **dadurch gekennzeichnet, dass** das Strukturelement (16) des Schlauchanschlussteils (13) so angeordnet und dimensioniert ist, dass der Verdrehschutz (4) der Mutter (1) an einem bestimmten Punkt des Verbindungsvorgangs zwischen dem Schlauchanschlussteil (13) und der Mutter (1) durch das Strukturelement (16) des Schlauchanschlussteils (13) von der Offenstellung in die Geschlossenstellung überführt wird, wenn das Schlauchanschlussteil (13) mit der Mutter (1) verbunden wird; wobei der Punkt vorzugsweise gegen Ende des Verbindungsvorgangs liegt, wobei das Schlauchanschlussteil (13) vorzugsweise so ausgebildet ist, dass das Strukturelement (16) erst dann mit der Mutter (1) zusammenwirkt, um den Verdrehschutz (4) von der Offenstellung in die Geschlossenstellung zu überführen, wenn das Schlauchanschlussteil (13) mit der Mutter (1) beinahe vollständig verbunden ist.

11. Kombination nach einem der Ansprüche 1-10, **dadurch gekennzeichnet, dass**
a) das Strukturelement (16) des Schlauchanschlussteils (13) mindestens ein Merkmal, vorzugsweise beide Merkmale, ausgewählt aus der nachfolgenden Merkmalsgruppe aufweist:
- das Strukturelement (16) ist ringförmig, vorzugsweise kreisförmig,
- das Strukturelement (16) ist im Bereich der Verbindungsvorrichtung (15) des Schlauchanschlussteils (13) angeordnet, wobei das Strukturelement (16) vorzugsweise an den Abschluss des Innengewindes angrenzt;
und/oder
b) das Strukturelement (16) des Schlauchanschlussteils (13) dazu ausgebildet ist, mit der Mutter (1) zusammenzuwirken, wobei das Strukturelement mindestens ein Merkmal, vorzugsweise mindestens zwei Merkmale, besonders bevorzugt alle drei Merkmale ausgewählt aus der nachfolgenden Merkmalsgruppe aufweist:
- das Strukturelement (16) ist dazu ausgebildet, auf mindestens ein Klemmelement (5) der Mutter (1) zu wirken,
- das Strukturelement (16) ist dazu ausgebildet, eine Klemmkraft, vorzugsweise eine radiale Klemmkraft, auf das mindestens eine Klemmelement (5) auszuüben,
- das Strukturelement (16) bewirkt eine Verringerung des Innendurchmessers des Schlauchanschlussteils (13), derart, dass auf das mindestens eine Klemmelement (5) der Mutter (1) eine Klemmkraft, vorzugsweise eine radiale Klemmkraft, ausgeübt wird, wenn das Schlauchanschlussteil (13) mit der Mutter (1) verbunden ist, wobei das Strukturelement (16) vorzugsweise dazu ausgebildet ist, direkten metallischen Kontakt mit dem Schlauchstutzen (7) herzustellen.

12. Kombination nach einem der Ansprüche 1 bis 11, **dadurch gekennzeichnet, dass** das Schlauchanschlussteil ein Schlauchanschlussteil für einen Kraftstoff- und/oder Gasschlauch, weiter vorzugsweise ein Zapfsäulenanschluss, besonders bevorzugt ein Zapfsäulenanschluss für einen Koaxialschlauch ist.

13. Kombination nach einem der Ansprüche 1 bis 12, **dadurch gekennzeichnet, dass** die Mutter (1) auf dem Schlauchstutzen (7) angeordnet ist.

## Claims

1. Combination comprising:
a) a hose attachment part (13) for a fluid hose;
b) a hose connector (7) for a further fluid hose; and
c) a nut (1) for arrangement on the hose connector (7); wherein
i) the nut has a connecting device (2) which is connectable in liquid-tight fashion to the hose attachment part (13); wherein the nut has a receptacle (3) for the hose connector (7), wherein the receptacle (3) has a first end (3a) and a second end (3b), wherein the receptacle (3) is designed to surround the hose connector (7) in form-fitting fashion in a circumferential direction in such a way that the nut (1) and the hose connector (7) are rotatable relative to one another in the circumferential direction; wherein the nut also has a relative-rotation prevention means (4) which is designed such that it can be transferred by way of a structural element (16) of the hose attachment part (13) from an open position, in which the nut (1) and the hose connector (7) are rotatable relative to one another in the circumferential direction when the nut (1) is arranged on the hose connector (7), into a closed position, in which a rotation of the nut (1) in the circumferential direction relative to the hose connector (7) is prevented when the nut (1) is arranged on the hose connector (7);
ii) the hose connector (7) has a tubular projection (9) for the fastening of the further fluid hose, wherein the outer side of the hose connector has a support surface (10) for the nut (1), wherein the dimensions of the hose connector (7) are coordinated with the nut (1) such that the hose connector (7) can be surrounded by the nut (1) in form-fitting fashion in the circumferential direction, in such a way that the hose connector (7) and the nut (1) are rotatable relative to one another in the circumferential direction;
iii) and the hose attachment part (13) comprises a fluid duct (14), at one end (14a) of which there is arranged a connecting device (15) which makes it possible to realize a liquid-tight connection to the nut (1), wherein the connecting device (15) preferably comprises an internal thread which can be connected to a corresponding external thread of the nut (1), wherein the hose attachment part (13) has the structural element (16) which is designed to transfer the relative-rotation prevention means (4) of the nut (1) from the open position into the closed position.

2. Combination according to Claim 1, **characterized in that** the nut (1) is designed such that the relative-rotation prevention means (4) is transferred from the open position into the closed position by the structural element (16) of the hose attachment part (13) at a certain point of the connecting process between the nut (1) and the hose attachment part (13) when the nut (1) is being connected to the hose attachment part (13); wherein the point preferably lies toward the end of the connecting process, wherein the nut (1) is preferably designed such that the relative-rotation prevention means (4) interacts with the structural element (16) of the hose attachment part (13) in order to transfer the relative-rotation prevention means (4) from the open position into the closed position only when the nut (1) has been almost fully connected to the hose attachment part (13).

3. Combination according to either of Claims 1 and 2, **characterized in that** the relative-rotation prevention means (4) of the nut (1) comprises at least one clamping element (5) which is preferably arranged on the inner side of the nut (1) and which can be transferred from the open position, which permits a rotational movement of the nut (1) in the circumferential direction relative to the hose connector (7) when the nut (1) is arranged on the hose connector (7), into a clamping position, in which the at least one clamping element (5) is pressed against the hose connector (7), in order to prevent a rotational movement of the nut (1) in the circumferential direction relative to the hose connector (7), when the nut (1) is arranged on the hose connector (7), wherein the at least one clamping element (5) is preferably designed to be held in the clamping position by way of a clamping force, preferably a radial clamping force.

4. Combination according to Claim 3, wherein
a) the relative-rotation prevention means (4) of the nut (1) comprises at least two, preferably 2 to 12 clamping elements (5) which are preferably spaced apart from one another in the circumferential direction, preferably 4 to 8 clamping elements (5) which are preferably spaced apart from one another in the circumferential direction, particularly preferably 6 clamping elements (5) which are preferably spaced apart from one another in the circumferential direction, and/or
b) the connecting device (2) of the nut (1) comprises an external thread which can be connected in liquid-tight fashion to a corresponding internal thread of the hose attachment part (13), wherein, preferably, the clamping element (5) or the clamping elements (5) project(s) beyond the external thread in an axial direction, and/or
c) the connecting device (2) of the nut (1) is arranged on the outer side of the nut (1) in the region of the first end (3a) of the receptacle (3), and/or the clamping element (5) or the clamping elements (5) is/are arranged on the inner side of the nut (1) in the region of the first end (3a) of the receptacle (3), and/or
d) the receptacle (3) for the hose connector (7) extends over the entire axial extent of the nut (1).

5. Combination according to one of Claims 1 to 4, **characterized in that** the nut (1) is composed of plastic, preferably of an electrically conductive plastic, particularly preferably of an electrically conductive plastic with an electrical resistance of between 200 and 1000 Ohm in accordance with EN 13617-2, wherein the plastic is preferably selected from the group composed of polyamides (PA) and polyether ether ketones (PEEK).

6. Combination according to one of Claims 1 to 5, wherein the nut (1) is designed such that the connection between the nut (1) and the hose attachment part (13) withstands tensile forces (measured in accordance with EM 13483 Annex K) of at least 2000 N over 2 minutes, preferably at least 2000 N over 5 minutes.

7. Combination according to one of Claims 1 to 6, **characterized in that** the nut (1) has reinforcement elements (6), wherein the reinforcement elements (6) are preferably spaced apart from one another in the circumferential direction and/or are preferably arranged on the inner side of the nut (1), preferably in the region of the first end (3a) of the receptacle (3), and/or are preferably arranged in the region of the connecting device (2).

8. Combination according to one of Claims 1-7, **characterized in that** the hose connector (7) has a holding device (11) which is designed to prevent an axial movement of the nut (1) relative to the hose connector (7), wherein the holding device (11) preferably comprises two holding elements (11a, 11b) which, between them, define the support surface (10) for the nut (1), wherein, preferably, at least one of the holding elements (11a, 11b), particularly preferably both holding elements (11a, 11b), is/are in the form of a flange or flanges, wherein the flange or the flanges preferably run(s) in continuous fashion in the circumferential direction, wherein the hose connector (7) is furthermore preferably designed to make contact, by way of its outer side, with a hose attachment part (13) in order to generate an electrical passage, wherein the hose connector (7) is particularly preferably designed to make contact, by way of one of its holding elements (11a), with a hose attachment part (13) in order to generate an electrical passage.

9. Combination according to Claim 3, **characterized in that** the hose connector (7) has, on its outer side, at least one section (12) which is provided so as to serve at least partially as a counterbearing for the at least one clamping element (5) of the nut (1), wherein the at least one section (12) which is provided so as to serve at least partially as a counterbearing for the at least one clamping element (5) of the nut (1) is preferably arranged in the region of the support surface (10).

10. Combination according to one of Claims 1-9, **characterized in that** the structural element (16) of the hose attachment part (13) is arranged and dimensioned such that the relative-rotation prevention means (4) of the nut (1) is transferred from the open position into the closed position by the structural element (16) of the hose attachment part (13) at a certain point of the connecting process between the hose attachment part (13) and the nut (1) when the hose attachment part (13) is being connected to the nut (1); wherein the point preferably lies toward the end of the connecting process, wherein the hose attachment part (13) is preferably designed such that the structural element (16) interacts with the nut (1), in order to transfer the relative-rotation prevention means (4) from the open position into the closed position, only when the hose attachment part (13) has been almost fully connected to the nut (1).

11. Combination according to one of Claims 1-10, **characterized in that**
a) the structural element (16) of the hose attachment part (13) has at least one feature, preferably both features, selected from the following feature group:
- the structural element (16) is ringshaped, preferably circular,
- the structural element (16) is arranged in the region of the connecting device (15) of the hose attachment part (13), wherein the structural element (16) preferably adjoins the termination of the internal thread;
and/or
b) the structural element (16) of the hose attachment part (13) is designed to interact with the nut (1), wherein the structural element has at least one feature, preferably at least two features, particularly preferably all three features, selected from the following feature group:
- the structural element (16) is designed to act on at least one clamping element (5) of the nut (1),
- the structural element (16) is designed to exert a clamping force, preferably a radial clamping force, on the at least one clamping element (5),
- the structural element (16) effects a reduction of the internal diameter of the hose attachment part (13), in such a way that a clamping force, preferably a radial clamping force, is exerted on the at least one clamping element (5) of the nut (1) when the hose attachment part (13) is connected to the nut (1), wherein the structural element (16) is preferably designed to produce direct metallic contact with the hose connector (7).

12. Combination according to one of Claims 1 to 11, **characterized in that** the hose attachment part is a hose attachment part for a fuel and/or gas hose, more preferably a refuelling pump attachment, particularly preferably a refuelling pump attachment for a coaxial hose.

13. Combination according to one of Claims 1 to 12, **characterized in that** the nut (1) is arranged on the hose connector (7).

## Revendications

1. Combinaison comprenant :
a) une pièce de raccordement de flexible (13) pour un flexible hydraulique ;
b) un embout de flexible (7) pour un autre flexible hydraulique ; et
c) un écrou (1) destiné à être disposé sur l'embout de flexible (7) ;
dans laquelle
i) l'écrou comporte un dispositif d'assemblage (2) qui peut être relié à la pièce de raccordement de flexible (13) de manière étanche aux liquides ; l'écrou comporte un réceptacle (3) pour l'embout de flexible (7), le réceptacle (3) comportant une première extrémité (3a) et une seconde extrémité (3b), le réceptacle (3) étant configuré pour entourer l'embout de flexible (7) selon une liaison par coopération de formes dans le sens de la circonférence de telle sorte que l'écrou (1) et l'embout de flexible (7) peuvent tourner l'un par rapport à l'autre dans le sens de la circonférence ; l'écrou comporte en outre une protection antitorsion (4) configurée de telle sorte qu'elle peut être déplacée par un élément structurel (16) de la pièce de raccordement de flexible (13) d'une position ouverte, dans laquelle l'écrou (1) et l'embout de flexible (7) peuvent tourner l'un par rapport à l'autre dans le sens de la circonférence lorsque l'écrou (1) est disposé sur l'embout de flexible (7), dans une position fermée dans laquelle une rotation de l'écrou (1) dans le sens de la circonférence par rapport à l'embout de flexible (7) est empêchée lorsque l'écrou (1) est disposé sur l'embout de flexible (7) ;
ii) l'embout de flexible (7) comporte un manchon tubulaire (9) servant à fixer l'autre flexible hydraulique, la face extérieure de l'embout de flexible comportant une surface d'appui (10) pour l'écrou (1), les dimensions de l'embout de flexible (7) étant adaptées à celles de l'écrou (1) de façon que l'embout de flexible (7) peut être entouré par l'écrou (1) par coopération de formes dans le sens de la circonférence de telle sorte que l'embout de flexible (7) et l'écrou (1) peuvent tourner l'un par rapport à l'autre dans le sens de la circonférence ;
iii) et la pièce de raccordement de flexible (13) comprend un conduit hydraulique (14) à une extrémité (14a) duquel est disposé un dispositif d'assemblage (15) qui permet un assemblage étanche aux liquides avec l'écrou (1), le dispositif d'assemblage (15) comprenant de préférence un filetage intérieur qui peut être relié à un filetage extérieur correspondant de l'écrou (1), la pièce de raccordement de flexible (13) comportant l'élément structurel (16) configuré pour déplacer la protection antitorsion (4) de l'écrou (1) de la position ouverte dans la position fermée.

2. Combinaison selon la revendication 1, **caractérisée en ce que** l'écrou (1) est configuré de telle sorte que, à un certain point du processus d'assemblage entre l'écrou (1) et la pièce de raccordement de flexible (13), la protection antitorsion (4) est déplacée par l'élément structurel (16) de la pièce de raccordement de flexible (13) de la position ouverte dans la position fermée lorsque l'écrou (1) est relié à la pièce de raccordement de flexible (13) ; le point se situe de préférence vers la fin du processus d'assemblage, l'écrou (1) étant de préférence configuré de telle sorte que la protection antitorsion (4) coopère seulement à ce moment-là avec l'élément structurel (16) de la pièce de raccordement de flexible (13) pour déplacer la protection antitorsion (4) de la position ouverte dans la position fermée lorsque l'écrou (1) est presque entièrement relié à la pièce de raccordement de flexible (13).

3. Combinaison selon l'une des revendications 1 ou 2, **caractérisée en ce que** la protection antitorsion (4) de l'écrou (1) comprend au moins un élément de serrage (5), de préférence disposé sur la face interne de l'écrou (1), qui peut être déplacé de la position ouverte, laquelle permet un mouvement de rotation de l'écrou (1) dans le sens de la circonférence par rapport à l'embout de flexible (7) lorsque l'écrou (1) est disposé sur l'embout de flexible (7), dans une position de serrage, dans laquelle ledit au moins un élément de serrage (5) est comprimé contre l'embout de flexible (7) afin d'empêcher un mouvement de rotation de l'écrou (1 par rapport à l'embout de flexible (7) dans le sens de la circonférence, lorsque l'écrou (1) est disposé sur l'embout de flexible (7), ledit au moins un élément de serrage (5) étant de préférence prévu pour être maintenu dans la position de serrage au moyen d'une force de serrage, de préférence une force de serrage radiale.

4. Combinaison selon la revendication 3, dans laquelle
a) la protection antitorsion (4) de l'écrou (1) comprend au moins deux éléments de serrage (5), de préférence 2 à 12 éléments de serrage (5) de préférence espacés les uns des autres dans le sens de la circonférence, de préférence 4 à 8 éléments de serrage (5) de préférence espacés les uns des autres dans le sens de la circonférence, de manière particulièrement préférée 6 éléments de serrage (5) de préférence espacés les uns des autres dans le sens de la circonférence, et/ou
b) le dispositif d'assemblage (2) de l'écrou (1) comprend un filetage extérieur qui peut être relié de manière étanche aux liquides à un filetage intérieur correspondant de la pièce de raccordement de flexible (13), le ou les éléments de serrage (5) dépassant de préférence du filetage extérieur dans la direction axiale, et/ou
c) le dispositif d'assemblage (2) de l'écrou (1) est disposé sur la face extérieure de l'écrou (1) dans la zone de la première extrémité (3a) du réceptacle (3) et/ou le ou les éléments de serrage (5) sont disposés sur la face interne de l'écrou (1) dans la zone de la première extrémité (3a) du réceptacle (3), et/ou
d) le réceptacle (3) pour l'embout de flexible (7) s'étend sur toute l'étendue axiale de l'écrou (1).

5. Combinaison selon l'une des revendications 1 à 4, **caractérisée en ce que** l'écrou (1) est fait d'une matière synthétique, de préférence d'une matière synthétique électroconductrice, de manière particulièrement préférée d'une matière synthétique électroconductrice ayant une résistance électrique de 200 à 1000 ohms suivant la norme EN 13617-2, la matière synthétique étant de préférence choisie dans le groupe constitué par des polyamides (PA) et des polyétheréthercétones (PEEK).

6. Combinaison selon l'une des revendications 1 à 5, dans laquelle l'écrou (1) est configuré de telle sorte que l'assemblage entre l'écrou (1) et la pièce de raccordement de flexible (13) résiste à des forces de traction (mesurées suivant la norme EN 13483 Annexe K) d'au moins 2000 N pendant 2 minutes, de préférence d'au moins 2000 N pendant 5 minutes.

7. Combinaison selon l'une des revendications 1 à 6, **caractérisée en ce que** l'écrou (1) comporte des éléments de renforcement (6), les éléments de renforcement (6) étant de préférence espacés les uns des autres dans le sens de la circonférence et/ou de préférence disposés sur la face interne de l'écrou (1), de préférence dans la zone de la première extrémité (3a) du réceptacle (3), et/ou de préférence disposés dans la zone du dispositif d'assemblage (2).

8. Combinaison selon l'une des revendications 1 à 7, **caractérisée en ce que** l'embout de flexible (7) comporte un dispositif de retenue (11) configuré pour empêcher un mouvement axial de l'écrou (1) par rapport à l'embout de flexible (7), le dispositif de retenue (11) comprenant de préférence deux éléments de retenue (11a, 11b) qui définissent entre eux la surface d'appui (10) pour l'écrou (1), de préférence au moins un des éléments de retenue (11a, 11b), de manière particulièrement préférée les deux éléments de retenue (11a, 11b) étant réalisé(s) en forme de collerette(s), la ou les collerettes s'étendant de préférence sans interruption dans le sens de la circonférence, l'embout de flexible (7) étant de préférence également configuré pour venir en contact par sa face extérieure avec une pièce de raccordement de flexible (13) afin de créer une continuité électrique, l'embout de flexible (7) étant de manière particulièrement préférée configuré pour venir en contact par un de ses éléments de retenue (11a) avec une pièce de raccordement de flexible (13) afin de créer une continuité électrique.

9. Combinaison selon la revendication 3, **caractérisée en ce que** l'embout de flexible (7) comporte sur sa face extérieure au moins un segment (12) prévu pour servir de contre-appui, du moins en partie, audit au moins un élément de serrage (5) de l'écrou (1), ledit au moins un segment (12) prévu pour servir de contre-appui, du moins en partie, audit au moins un élément de serrage (5) de l'écrou (1) étant disposé de préférence dans la zone de la surface d'appui (10).

10. Combinaison selon l'une des revendications 1 à 9, **caractérisée en ce que** l'élément structurel (16) de la pièce de raccordement de flexible (13) est disposé et dimensionné de telle sorte que, à un certain point du processus d'assemblage entre la pièce de raccordement de flexible (13) et l'écrou (1), la protection antitorsion (4) de l'écrou (1) est déplacée par l'élément structurel (16) de la pièce de raccordement de flexible (13) de la position ouverte dans la position fermée lorsque la pièce de raccordement de flexible (13) est reliée à l'écrou (1) ; dans laquelle le point se situe de préférence vers la fin du processus d'assemblage, la pièce de raccordement de flexible (13) étant de préférence configurée de telle façon que l'élément structurel (16) coopère seulement à ce moment-là avec l'écrou (1) pour déplacer la protection antitorsion (4) de la position ouverte dans la position fermée lorsque la pièce de raccordement de flexible (13) est presque entièrement reliée à l'écrou (1).

11. Combinaison selon l'une des revendications 1 à 10, **caractérisée en ce que**
a) l'élément structurel (16) de la pièce de raccordement de flexible (13) possède au moins une caractéristique, de préférence les deux caractéristiques, choisies dans le groupe des caractéristiques suivantes :
- l'élément structurel (16) est de forme annulaire, de préférence circulaire,
- l'élément structurel (16) est disposé dans la zone du dispositif d'assemblage (15) de la pièce de raccordement de flexible (13) dans laquelle l'élément structurel (16) est de préférence adjacent à la fin du filetage intérieur ;
et/ou
b) l'élément structurel (16) de la pièce de raccordement de flexible (13) est configuré pour coopérer avec l'écrou (1), l'élément structurel possédant au moins une caractéristique, de préférence au moins deux caractéristiques, de manière particulièrement préférée l'ensemble des trois caractéristiques choisies dans le groupe des caractéristiques suivantes :
- l'élément structurel (16) est configuré pour agir sur au moins un élément de serrage (5) de l'écrou (1),
- l'élément structurel (16) est configuré pour exercer une force de serrage, de préférence une force de serrage radiale, sur ledit au moins un élément de serrage (5),
- l'élément structurel (16) entraîne un rétrécissement du diamètre intérieur de la pièce de raccordement de flexible (13) de telle sorte qu'une force de serrage, de préférence une force de serrage radiale, est exercée sur ledit au moins un élément de serrage (5) de l'écrou (1) lorsque la pièce de raccordement de flexible (13) est reliée à l'écrou (1), l'élément structurel (16) étant de préférence configuré pour établir un contact métallique direct avec l'embout de flexible (7).

12. Combinaison selon l'une des revendications 1 à 11, **caractérisée en ce que** la pièce de raccordement de flexible est une pièce de raccordement destinée à un flexible pour carburant et/ou pour gaz, plus préférentiellement un raccord de distributeur de carburant, de manière particulièrement préférée un raccord de distributeur de carburant pour flexible coaxial.

13. Combinaison selon l'une des revendications 1 à 12, **caractérisée en ce que** l'écrou (1) est disposé sur l'embout de flexible (7).
